(19) Europäisches Patentamt
European Patent Office
Office européen des brevets

(11) EP 1 176 295 B1

(12) **EUROPEAN PATENT SPECIFICATION**

(45) Date of publication and mention of the grant of the patent:
**29.09.2004 Bulletin 2004/40**

(51) Int Cl.[7]: **F01N 11/00**, F01N 3/20, F01N 3/36, F02D 41/14, F02D 41/22, F02B 77/08

(21) Application number: **01117850.6**

(22) Date of filing: **23.07.2001**

(54) **Apparatus and method for diagnosing reducing-agent supplying device in internal combustion engine**

Vorrichtung und Verfahren zur Diagnose der Versorgungsvorrichtung eines Reduktionsmittels einer Brennkraftmaschine

Dispositif et méthode de diagnostic d'un dispositif d'alimentation en un agent réducteur pour moteur à combustion interne

(84) Designated Contracting States:
**DE FR GB**

(30) Priority: **24.07.2000 JP 2000223048**

(43) Date of publication of application:
**30.01.2002 Bulletin 2002/05**

(73) Proprietor: **TOYOTA JIDOSHA KABUSHIKI KAISHA**
**Aichi-ken 471-8571 (JP)**

(72) Inventors:
- **Matsuoka, Hiroki**
  **Toyota-shi, Aichi-ken,471-8571 (JP)**
- **Kobayashi, Masaaki**
  **Toyota-shi, Aichi-ken,471-8571 (JP)**
- **Ishiyama, Shinobu**
  **Toyota-shi, Aichi-ken,471-8571 (JP)**
- **Magarida, Naofumi**
  **Toyota-shi, Aichi-ken,471-8571 (JP)**
- **Tahara, Jun**
  **Toyota-shi, Aichi-ken,471-8571 (JP)**
- **Negami, Akihiro**
  **Toyota-shi, Aichi-ken,471-8571 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(56) References cited:
**DE-A- 19 847 875** **DE-A- 19 914 787**
**US-A- 4 696 277**

- **PATENT ABSTRACTS OF JAPAN vol. 1999, no. 09, 30 July 1999 (1999-07-30) & JP 11 093641 A (TOYOTA MOTOR CORP), 6 April 1999 (1999-04-06)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 176 295 B1

## Description

## BACKGROUND OF THE INVENTION

### 1.Field of the Invention

The present invention relates a diagnosing apparatus adapted to , perform various diagnosing operations to diagnose a reducing-agent supplying device which is arranged to purify harmful components of an exhaust emission from an internal combustion engine of lean-burn type, by introducing a reducing agent into an exhaust system of the engine, at a point upstream of a reducing catalyst provided in the exhaust system. This invention is also concerned with a method of diagnosing such a reducing-agent supplying device.

### 2.Description of the Related Art

A diesel engine and a gasoline engine of lean-burn type are internal combustion engines operable by combustion of a fuel-lean air-fuel mixture having a comparatively high air/fuel ratio, under a relatively wide variety of operating condition of the engines. The internal combustion engine of this type is generally provided with an NOx absorbing composition (NOx catalyst) disposed in its exhaust system, for absorbing nitrogeNOxides (NOx) in the presence of oxygen.

The NOx catalyst is characterized by its capability of absorbing NOx while the exhaust emission produced by the engine has a comparatively high oxygen concentration, and releasing the NOx while the exhaust emission has a comparatively low oxygen concentration. The NOx released into the exhaust emission is reduced into $N_2$ by immediate reaction with reducing components such as HC (hydrocarbon) and CO (carbon moNOxide) if contained in the exhaust emission. The NOx catalyst has another characteristic that it does not absorb the NOx even while the exhaust emission has a comparatively high oxygen concentration, after the amount of the NOx which has been absorbed in the NOx catalyst has increased to a given upper limit.

In view of the above-indicated drawback, the internal combustion engine provided with the NOx catalyst disposed in its exhaust system is commonly arranged to perform a predetermined control cycle of treatment at a predetermined time interval, to introduce a reducing agent into the exhaust system before the amount of the NOx absorbed in the NOx catalyst has reached the upper limit, so that the NOx absorbed in the NOx catalyst is released and reduced into $N_2$, to recover the NOx absorbing ability or function of the NOx catalyst.

To perform the control cycle to recover the NOx absorbing ability or function of the NOx catalyst for purifying the exhaust emission in the manner as described above, a reducing-agent supplying device is widely employed to introduce the reducing agent into the exhaust system of the engine through an injector valve or other suitable injecting means, such that the reducing agent to be injected has been pressurized to a suitable pressure level.

JP-A-1(1)-132020 discloses an example of such a reducing-agent supplying device, which utilizes fuel injector valves connected to a common rail and operable to effect a primary fuel injection to inject a fuel into respective combustion chambers of an internal combustion engine for operating the engine to produce an output. The reducing-agent supplying apparatus is arranged to effect a secondary fuel injection at an appropriate timing, for introducing a suitable amount of the fuel as the reducing agent into the exhaust system, with the fuel kept in an unburned state. The reducing-agent supplying device is further arranged to control the amount of the fuel to be introduced in the secondary fuel injection, and the timing at which the secondary fuel injection is effected, so that the NOx catalyst provided in the exhaust system is kept capable of performing its intended function.

JP-A-06128239 discloses a reducing-agent supplying device provided with a fuel introducing nozzle disposed in the exhaust system of the internal combustion engine, upstream of the NOx catalyst. The fuel introducing nozzle receives the fuel (as the reducing agent) directly from a feed pump through a fuel passage, while the feed pump is in operation to pump up the fuel from a fuel tank. The NOx catalyst in the exhaust system is supplied with the reducing agent injected or introduced by the fuel introducing nozzle at the suitable timing. In the reducing-agent supplying device arranged as described above, the amount of the fuel to be introduced into the exhaust system is controlled by a suitable metering valve disposed in the fuel passage.

The reducing-agent supplying devices disclosed in the above-identified publications may suffer from defects or abnormalities such as: plugging of the fuel introducing nozzle with foreign matters; failure of the above-indicated metering valve and fuel injector valves to normal open and close; and failure of fuel-pressure sensor to normally monitor the pressure of the fuel within a reducing-agent supply system including the fuel passage and common rail indicated above. In the event of the plugging of the fuel introducing nozzle or the opening and closing failure of the metering valve or fuel injection valve, for example, the desired amount of reducing agent cannot be introduced into the exhaust system through the fuel introducing nozzle or fuel injector valve. The total amount of the reducing agent to be injected or introduced into the exhaust system is principally determined by the pressure of the fuel in the reducing-agent supply system and the time period during which the metering valve and fuel injector valve are open. Where the fuel-pressure sensor fails to normally detect the fuel pressure, the desired time period of opening of the metering valve and/or fuel injector valve necessary to introduce the desired amount of the reducing agent is erroneously determined on the basis of an erroneous output of the pressure sensor.

In view of the above drawback, the reducing-agent supplying device as disclosed in JP-A-11-132020, for instance, is adapted such that the fuel-pressure sensor is diagnosed to be potentially defective if the fuel pressure actually detected by the fuel-pressure sensor deviates from a target value for more than a predetermined time duration. Normally, the fuel pressure within the fuel supply system (within the common rail in the device disclosed in the publication identified just above) is kept at the target value by a suitable pressure controller. Where a potential defect of the fuel-pressure sensor is detected, the reducing-agent supplying device compensates the fuel pressure as detected by the potentially defective fuel-pressure sensor.

However, the reducing-agent supplying device disclosed in the publication identified above is merely arranged to assume that the fuel-pressure sensor is defective, for preventing an excessively large amount of introduction of the fuel into the exhaust system, where the fuel pressure actually detected by this sensor deviates from the target value for more than the predetermined time duration. That is, the reducing-agent supplying device in question is not arranged to diagnose the metering valve and the fuel introducing nozzle for a defect that causes a similar deviation between the fuel pressure actually detected by the fuel-pressure sensor and the target value. Thus, the reducing-agent supplying device does not permit accurate determination or detection of a defective portion of the reducing-agent supply system, and adequate treatment to deal with the detected defective portion.

## SUMMARY OF THE INVENTION

The present invention was made in view of the state of the art concerned. It is therefore a first object of the present invention to provide a diagnosing apparatus capable of accurately detecting various defects of a reducing-agent supplying device arranged to introduce a reducing agent to an NOx catalyst disposed in an exhaust system of an internal combustion engine.

A second object of this invention is to provide a method by which such a reducing-agent supplying device can be accurately diagnosed for various defects.

The first object indicated above may be achieved according to a first aspect of the present invention, which provides a diagnosing apparatus according to claim 1, while the second object indicated above may be achieved according to a second aspect of the present invention, which provides a method according to claim 12.

When the reducing-agent supplying device is normally functioning, the actual state of the exhaust emission detected after the initiation of introduction of the reducing agent into the exhaust system has a predetermined relationship with the nominal state. The diagnosing apparatus constructed according to the principle of this invention is arranged to diagnose the reducing-agent supplying device, depending upon whether the detected actual state of the exhaust emission after the initiation of introduction of the reducing agent into the exhaust system of the engine deviates from the nominal or normal state. Accordingly, the present diagnosing apparatus permits a high degree of reliability in the diagnosis of the reducing-agent supplying device, assuring relatively early detection of a defect of the reducing-agent supplying device, which defect prevents an appropriate treatment of the reducing catalyst to recover its reducing efficiency or ability. Thus, the present diagnosing apparatus permits relatively early treatment to deal with the defect.

The state of the exhaust emission may be preferably selected from among the following parameters: a minimal value to which the oxygen concentration of the exhaust emission is lowered as a result of introduction of the reducing agent into the exhaust system; a rate of change of the oxygen concentration during the introduction of the reducing agent; a minimal value to which the concentration of reducing components in the exhaust emission is increased as a result of introduction of the reducing agent; and a rate of change of the concentration of the reducing components during the introduction of the reducing agent.

The above-indicated parameters detected after the initiation of introduction of the reducing agent have a high degree of correlationship with each other and predetermined relationships with their nominal values, as long as the reducing-agent supplying apparatus is normally functioning. A variation of those parameters or a deviation of any of those parameters from the nominal value clearly indicates any defect of the reducing-agent supplying device. Thus, the use of such parameters permits exact and highly reliable diagnosis of the reducing-agent supplying device.

## BRIEF DESCRIPTION OF THE DRAWINGS

The above and other objects, features, advantages, and technical and industrial significance of this invention will be better understood by reading the following detailed description of presently preferred exemplary embodiments of the invention, when considered in connection with the accompanying drawings, in which:

Fig. 1 is a schematic view showing a diesel engine system incorporating a reducing-agent supplying device, and a diagnosing apparatus constructed according to a first embodiment of the present invention to diagnose the reducing-agent supplying device;

Fig. 2 is a flow chart illustrating a fuel introduction control routine executed by the diagnosing apparatus of the first embodiment;

Fig. 3a is a time chart indicating a change in a commanded value of an electric current to be applied to a metering valve of the reducing-agent supplying apparatus, in an operation to control the fuel introduction in the first embodiment;

Fig. 3b is a time chart indicating a change in the air/fuel ratio of an exhaust emission from the diesel engine, in the fuel introduction control operation in the first embodiment;

Fig. 3c is a time chart indicating a change in the fuel pressure at a point upstream of the metering valve, in the fuel introduction control operation in the first embodiment;

Fig. 3d is a time chart indicating a change in the fuel pressure at a point downstream of the metering valve, in the fuel introduction control operation in the first embodiment;

Fig. 4 is a flow chart illustrating a diagnostic routine executed by the diagnosing apparatus of the first embodiment, for diagnosing a fuel-pressure sensor of the reducing-agent supplying device;

Fig. 5 is a flow chart illustrating a fuel introduction control routine executed by a diagnosing apparatus according to a second embodiment of the invention;

Fig. 6 is a time chart indicating a change in the air/fuel ratio of the exhaust emission when a fuel supply pump or the metering valve is defective in its function, in a third embodiment of this invention;

Fig. 7 is a time chart indicating a change in the air/fuel ratio of the exhaust emission when the fuel-pressure sensor is defective, in the third embodiment;

Fig. 8 is a time chart indicating a change in the air/fuel ratio of the exhaust emission when a fuel introducing nozzle is defective in its opening action, in the third embodiment;

Fig. 9 is a time chart indicating a change in the air/fuel ratio of the exhaust emission when the fuel introducing nozzle is defective in its opening action;

Fig. 10 is a flow chart illustrating a fuel introduction control routine executed by a diagnosing apparatus according to the third embodiment;

Fig. 11 is schematic view showing a diesel engine incorporating a reducing-agent supplying device, and a diagnosing apparatus constructed according to a fourth embodiment of this invention;

Fig. 12 is a flow chart illustrating a diagnostic routine executed by the diagnosing apparatus of the fourth embodiment, for diagnosing a fuel introducing nozzle, a fuel supply pump and a metering valve of the reducing-agent supplying device of the engine of Fig. 11;

Fig. 13 is a flow chart illustrating a diagnostic routine executed by a diagnosing apparatus according to a fifth embodiment of this invention, for diagnosing the fuel introducing nozzle, fuel supply pump and metering valve.

## DETAILED DESCRIPTION OF THE PREFERRED EMBODIMENTS

Referring first to Figs. 1-4, there will be described a diagnosing apparatus constructed according to the first embodiment of the invention to diagnose a reducing-agent supplying device of an internal combustion engine in the form of a diesel engine.

The internal combustion engine generally indicated at 1 in Fig. 1 is an in-line four-cylinder diesel engine (hereinafter referred to simply as "engine") which includes, as major component parts, a fuel supply system 1, combustion chambers 20, an intake system 30, an exhaust system 40.

The fuel supply system (which also serves as a reducing-agent supplying device, as described below) 10 includes a fuel supply pump 11, a common rail 12, fuel injector valves 13, a cut-off valve 14, a metering valve 16, a fuel introducing nozzle 17, a primary fuel supply passage P1, and a secondary fuel supply passage P2.

The fuel supply pump 11 pressurizes a fuel received from a fuel pump (not shown), and delivers the pressurized fuel to the common rail 12 through the primary fuel supply passage P1. The common rail 12 functions as a fuel accumulator for storing the pressurized fluid received from the supply pump 11, at a predetermined pressure level. The pressurized fluid is distributed from the common rail 12 to the individual fuel injector valves 13. Each of the fuel injector valves 13 is an electromagnetically operated valve which incorporates a solenoid coil (not shown) and which is opened when needed, to inject the fuel into the corresponding combustion chamber 20.

The fuel supply pump 11 is also connected to the fuel introducing nozzle 17 through the secondary fuel supply passage P2, so that the pressurized fuel is also delivered to the fuel introducing nozzle 17. The secondary fuel supply passage P2 is provided with the cut-off valve 14 and the metering valve 16 disposed in this order in the direction from the fuel supply pump 11 toward the fuel introducing nozzle 17. The cut-off valve 14 is closed, in an emergency, to close the secondary fuel supply passage P2 for inhibiting the supply of the fuel into the engine 1. The metering valve 16 is provided to regulate the pressure of the fuel to be delivered to the fuel introducing nozzle 17. The fuel introducing nozzle 17 is a mechanically operated shut-off valve which is arranged to be opened to inject the fuel into the exhaust system 40, when the pressure of the fuel delivered thereto is not lower than a predetermined threshold (e.g., 0.2Mpa). That is, the fuel introducing nozzle 17 is provided to introduce a suitable amount of fuel into the exhaust system 40 at a suitable timing, with the metering valve 16 being controlled to regulate the pressure of the fuel upstream of the fuel introducing nozzle 17.

The intake system 30 has an air-intake conduit (intake passage) for introducing air into each combustion chamber 20, while the exhaust system 40 has an exhaust-gas conduit (exhaust passage) for discharging an exhaust gas from each combustion chamber 20.

The engine 1 is provided with a turbocharger 50 as well known in the art, which includes two turbine wheels 52 and 53 connected to each other by a shaft 51. One of the turbine wheels 52 and 53 disposed on the intake side, namely, the intake-side turbine wheel 52 is exposed to the intake air, while the other turbine wheel on the exhaust side (exhaust-side turbine wheel or compressor wheel 53) is exposed to the exhaust gas. In the turbocharger 50 thus constructed, the exhaust-side turbine wheel 53 is rotated by a stream (pressure) of the exhaust gas, to thereby rotate the intake-side turbine wheel 52, for performing a so-called "turbocharging action" to increase the pressure of the intake air.

The intake system 30 includes an intercooler 31 connected to the turbocharger 50. The intercooler 31 is provided to positively cool the intake air the temperature of which is raised by the turbocharging action by the turbocharger 50. A throttle valve 32 is disposed downstream of the intercooler 31. The throttle valve 32 is an electrically operated valve whose angle of opening is continuously variable. The throttle valve 32 has a function of throttling the quantity of the intake air (lowering the rate of flow of the intake air) by reducing its angle of opening under a predetermined condition.

The engine 1 is further provided with an exhaust gas recirculating passage (EGR passage) 60 connecting the intake and exhaust sides of each combustion chamber 20, namely, connecting the intake and exhaust systems 20 and 30. The EGR passage 60 is provided to return a portion of the exhaust gas from the exhaust system 30 back to the intake system 30, as needed. The EGR passage 60 is provided with an electrically controlled EGR valve 61 and an EGR cooler 62. The amount of opening of the EGR valve 61 is continuously variable to control the rate of flow of the exhaust gas through the EGR passage 60. The EGR cooler 62 is provided to cool the exhaust gas flowing through the EGR passage 60.

In a downstream portion of the exhaust system 40, there is disposed a catalyst casing 42 which houses an NOx catalyst 41 of storage-reduction type (hereinafter referred to simply as "NOx catalyst 41"). For instance, the NOx catalyst 41 accommodated in the catalyst housing 42 includes (a) a substrate formed of alumina ($Al_2O_3$), for example, (b) at least one element carried on the substrate and selected from alkali metals such as potassium (K), sodium (Na), lithium (Li) and cesium (Cs), alkali earth metals such as barium (Ba) and calcium (Ca), and rare earth metals such as lanthanum (La) and yttrium (Y), and (c) at least one noble metal such as platinum (Pt) also carried on the substrate.

When the NOx catalyst 41 is exposed to the exhaust emission having a comparatively high oxygen concentration, the NOx catalyst 41 absorbs NOx. When the air/fuel ratio of the air-fuel mixture is lower than the stoichiometric value, and the exhaust emission has a comparatively low oxygen concentration and contains a reducing agent (e.g., unburned fuel components such as HC), the NOx absorbed in the NOx catalyst 41 is reduced into $NO_2$ or NO. The NOx released from the NOx catalyst 41 as $NO_2$ or NO is further reduced into $N_2$ by immediate reaction with HC and CO contained in the exhaust emission. HC and CO which reduce $NO_2$ and NO are oxidized into $H_2O$ and $CO_2$. Thus, HC, CO and NOx contained in the exhaust emission can be removed or purified by suitably adjusting the concentrations of oxygen and HC component of the exhaust emission to which the catalyst casing 42 (NOx catalyst 41) is exposed.

The engine 1 is provided with various sensors at respective local positions. These sensors generate output signals indicative of the operating conditions at those positions and the operating state of the engine 1.

Discussed in detail, the engine 1 uses a common-rail-pressure sensor 70, a fuel-pressure sensor 71, an airflow meter 72, an A/F ratio sensor 73, an exhaust-gas temperature sensor 74, an accelerator position sensor 75 and a crankshaft position sensor 76. The common-rail-pressure sensor 70 generates an output signal indicative of the pressure of the fuel within the common rail 12. The fuel-pressure sensor 71 generates an output signal indicative of a pressure Pg of the fuel to be introduced into the metering valve 16 through the secondary fuel supply passage P2. The airflow meter 72 generates an output signal indicative of a rate of flow Ga of the air into the intake system 30 (intake air quantity Ga). The A/F ratio sensor 73 generates an output signal indicative of the air/fuel ratio of the exhaust emission at a point downstream of the catalyst casing 42 in the exhaust system 40. The air/fuel ratio continuously changes with a change in the oxygen concentration of the exhaust emission. The exhaust-gas temperature sensor 74 generates an output signal indicative of a temperature Tex of the exhaust emission at a point downstream of the catalyst casing 42 in the exhaust system 40.

The accelerator position sensor 75 is disposed near an accelerator pedal (not shown) of the engine 1, and generates an output signal indicative of an operating amount Acc of the accelerator pedal. The crankshaft position sensor 76 generates a pulse signal each time an output shaft (crankshaft) of the engine 1 is rotated by a predetermined angle. These sensors 70-76 described above are electrically connected to an electric control unit (ECU) 80.

The ECU 80 is principally constituted by a microcomputer incorporating a central processing unit (CPU) 81, a read-only memory (ROM) 82, a random-access memory (RAM) 83, a back-up RAM 84, a time counter 85, an input circuit 86 including an A/D converter, and an output circuit 86, which are interconnected with each other through a bidirectional bus 88.

The ECU 80 having an arrangement described above receives the output signals of the above-described various sensors 70-76 through the input circuit 86, and operates on the basis of the output signals of these sensors 70-76, to perform basic control operations to control the fuel injection into the engine 1, on the basis of the received output signals of the sensors, and various other control operations such as a fuel introduction control operation to introduce the fuel as the reducing agent through the fuel introducing nozzle 17. The fuel introduction control operation includes a determination of the timing at which the fuel is introduced, and a determination of the amount of the fuel to be introduced.

There will be described in detail the fuel introduction control operation to introduce the fuel as the reducing agent according to the first embodiment. Generally, an air-fuel mixture consisting of the intake air and the fuel for combustion in a diesel engine has a comparatively high oxygen concentration in substantially all operating conditions of the engine. The original oxygen concentration of the air-fuel mixture for combustion, is usually reflected on the oxygen concentration (air/fuel ratio) of the exhaust emission, although a portion of the oxygen contained in the air-fuel mixture is consumed by the combustion. Accordingly, when the air-fuel mixture has a relatively high oxygen concentration (a relatively high air/fuel ratio), the oxygen concentration (air/furl ratio) of the exhaust emission is accordingly comparatively high, in principle. On the other hand, an NOx catalyst of storage-reduction type absorbs NOx contained in the exhaust emission when the exhaust emission has a comparatively high oxygen concentration, and reduces the NOx absorbed in the NOx catalyst into $NO_2$ or NO when the oxygen concentration of the exhaust emission is comparatively low, as described above. Therefore, the NOx catalyst absorbs the NOx while the oxygen concentration of the exhaust emission is comparatively high. However, the amount of the NOx that can be absorbed in the storage-reduction type NOx catalyst is limited. After the amount of the NOx absorbed in the NOx catalyst has increased to the upper limit, the NOx catalyst can no longer absorb the NOx, and the NOx flow through the catalyst casing.

In view of the limitation of the amount of NOx that can be absorbed in the NOx catalyst 41, the engine 1 is provided with the fuel introducing nozzle 17 through which the fuel is introduced into the exhaust system 40, at a position upstream of the NOx catalyst 41, at an appropriate timing, while at the same time the intake air quantity Ga is reduced by reducing the angle of opening of the throttle valve 32, so that the amount of the reducing components (HC, etc.) contained in the exhaust emission is increased. As a result, the NOx which has been absorbed in the NOx catalyst 41 is reduced into $NO_2$ and NO, which are released into the exhaust emission, so that the initial NOx absorbing ability or function is recovered. $NO_2$ and NO released in the exhaust emission immediately react with HC and CO and are thus reduced into $N_2$, as described above.

The efficiency of reduction of the NOx absorbed in the NOx catalyst 41 or the efficiency of releasing of the absorbed NOx from the NOx catalyst 42 is determined by (1) the amount of the reducing components contained in (the fuel content of) the exhaust emission to which the NOx catalyst 41 is exposed, and (2) the oxygen concentration (air/fuel ratio) of the exhaust emission.

In the engine 1, the fuel is introduced into the exhaust system 40, in order to increase the stability or adequacy of control of the amount of the reducing components contained in the exhaust emission and the air-fuel ratio of the exhaust emission. There will be described in detail the fuel introduction control effected by the ECU 80 of the engine 1 according to the present embodiment, by reference to the flow chart of Fig. 2.

The flow chart of Fig. 2 illustrates a fuel introduction control routine to determine the amount of the fuel to be introduced into the exhaust system 40, and the timing at which the fuel is introduced. The ECU 80 initiates this fuel introduction control routine upon starting of the engine 1, and repeatedly executes this control routine with a predetermined cycle time.

The fuel introduction control routine is initiated with step S101 to detect the operating condition of the engine 1, which is used by the ECU 80 to determine whether it is necessary to control the metering valve 16 to effect the fuel introduction into the exhaust system 40. For instance, the ECU 80 obtains an operating speed Ne of the engine 1 on the basis of the output signal of the crank position sensor 76, and the oxygen concentration of the exhaust emission (hereinafter referred to as "exhaust-gas air/fuel ratio A/F) on the basis of the output signal of the A/F ratio sensor 73. Further, the ECU 80 obtains the operating amount Acc of the accelerator pedal on the basis of the output signal of the accelerator position sensor 75, and the temperature Tex of the exhaust emission on the basis of the output signal of the exhaust-gas temperature sensor 74.

Then, the control flow goes to step S102 to determine whether the fuel introduction into the exhaust system 40 is necessary. For instance, the ECU 80 determines that the fuel introduction is necessary, when all of the following conditions (1)-(3) are all satisfied:

(1) A relationship between the operating speed Ne of the engine 1 and the operating amount Acc of the accelerator pedal indicates that the engine 1 is in an operating state suitable for effecting the fuel introduction into the exhaust system 40, that is, in an operating state in which the fuel introduction would not cause any trouble or problem with the engine 1 such as a variation in the output torque. An example of this operating state of the engine 1 is a state in which a vehicle equipped with the engine is decelerated.

(2) The temperature Tex of the exhaust emission is higher than a predetermined lower limit (e.g.,

250°C) above which the NOx catalyst 41 is expected to be sufficiently active.

(3) The amount of the NOx absorbed in the NOx catalyst 41 is larger than a predetermined threshold, which is smaller than and close to the upper limit of the NOx about that can be absorbed in the NOx catalyst 41. The amount of the NOx absorbed in the NOx catalyst 41 may be estimated on the basis of a time lapse after the last fuel introduction into the exhaust system 40, the exhaust-gas air/fuel ratio, the temperature Tex of the exhaust emission, and the other parameters indicative of the hysteresis of the engine 1.

When the ECU 80 determines that all of the above conditions (1)-(3) are satisfied, the ECU 80 determines that the fuel introduction into the exhaust system 40 is necessary. In this case, the control flow goes to step S103. If the ECU 80 determines that any one of the above conditions (1)-(3) is not satisfied, one cycle of execution of the fuel introduction control routine of Fig. 2 is terminated.

In step S103, the ECU 80 determines an amount Q of introduction of the fuel from the fuel introducing nozzle 17 (total amount of introduction in one fuel injecting action of the nozzle 17) necessary to control the exhaust-gas air/fuel ratio A/F to a desired or target value and to release and reduce the entire amount of the NOx absorbed in the NOx catalyst 41. Further, the ECU 80 determines a pattern of change of the fuel introduction amount as a function of time, which pattern is represented by a time-amount curve.

The total amount Q of fuel introduction from the fuel introducing nozzle 17 is basically determined according to the following equation (1), as a function of a time T(ms) during which the metering valve 16 is held open, and the pressure Pg of the fuel delivered to the fuel introducing nozzle 17 through the secondary fuel supply passage P2 during the above-indicated time T.

$$Q = f(T, Pg) \qquad (1)$$

That is, the ECU 80 calculates the time T on the basis of the presently detected pressure Pg of the fuel delivered to the metering valve 16 through the secondary fuel supply passage P2, so that the amount Q of the fuel determined as described above is introduced into the exhaust system 40 through the fuel introducing nozzle 17. The ECU 80 then applies either continuously or intermittently an electric current to the solenoid coil of the metering valve 16, at a suitable timing, for opening the metering valve 16 for the determined total time T (ms), so that the fuel is introduced into the exhaust system 40 according to the pattern determined as described above.

In the manner described above, the ECU 80 controls the fuel introduction into the exhaust system 40 to release and reduce the NOx absorbed in the NOx catalyst 41, for thereby recovering the NOx catalyst 41. There will next be described the diagnosing apparatus according to the present first embodiment of the invention to diagnose the reducing-agent supplying device which has been described. The diagnosing apparatus includes the fuel-pressure sensor 71, the airflow meter 72, the A/F ratio sensor 73 and the ECU 80.

Referring to the time charts of Figs. 3a, 3b, 3c and 3d, there are respectively indicated a change in the amount of electric current to be applied to the metering valve 16 under the control of the ECU 80 (Fig. 3a), a change in the exhaust-gas air/fuel ratio as detected by the A/F ratio sensor 73 (Fig. 3b), a change in the fuel pressure at a position upstream of the metering valve 16 (Fig. 3c), and a change in the fuel pressure at a position downstream of the metering valve 16 (Fig. 3d), when the fuel introduction control is normally effected by the ECU 80.

When a commanded value of electric current is continuously applied to the metering valve 16 for a predetermined time, as indicated in the time chart of Fig. 3a, the metering valve 16 is held open for substantially the same period of time, so that the pressurized fuel is delivered through the metering valve 16 to the fuel introducing nozzle 17 downstream of the metering valve 16, and the nozzle 17 is opened by the pressure of the received pressurized fuel.

As a result of the application of the electric current to the metering valve 16 and the consequent opening of the fuel introducing nozzle 17 to introduce the fuel into the exhaust system 40, the exhaust-gas air/fuel ratio A/F is temporarily lowered, as indicated in the time chart of Fig. 3b. In other words, the exhaust-gas air/fuel ratio A/F is lowered from a nominal or base value $A/F_{base}$ to a minimal value $A/F_{pksens}$. This phenomenon is called a "rich spike". The base air/fuel ratio $A/F_{base}$ is an average air/fuel ratio of the exhaust emission before and after the reduction of the air/fuel ratio down to the minimal value $A/F_{pksens}$. The minimal value $A/F_{pksens}$ is an actually measured value.

As indicated in the time chart of Fig. 3c, the pressure of the fuel upstream of the metering valve 16 is also temporarily lowered as a result of the opening action of the metering valve 16 and the consequent opening action of the fuel introducing nozzle 17. Since the fuel supply pump 11 is kept operated to deliver the pressurized fuel, the amount of reduction of the fuel pressure upstream of the metering valve 16 is comparatively small.

As indicated in the time chart of Fig. 3d, the fuel pressure downstream of the metering valve 16 is temporarily raised as a result of the opening action of the metering valve 16. This rise of the fuel pressure downstream of the metering valve 16 causes the fuel introducing nozzle 17 to be mechanically opened to introduce the fuel into the exhaust system 40.

When the fuel-pressure sensor 71 becomes defective, the fuel introduction amount Q determined according to the above equation (1) on the basis of the detected fuel pressure Pg undesirably deviates from the desired value, so that the exhaust-gas air/fuel ratio A/F to be established by the determined amount Q of fuel introduction deviates from the target or desired value on which the amount Q is determined. To avoid this drawback, the diagnosing apparatus according to the present embodiment is arranged to compare the exhaust-gas air/fuel ratio A/F actually established as a result of the fuel introduction into the exhaust system 40, with the target value. The diagnosing apparatus then determines whether a difference of the actual exhaust-gas air/fuel ratio A/F and the target value thereof is larger than a predetermined threshold, and diagnoses the fuel-pressure sensor 71 to be defective if the difference is larger than the predetermined threshold.

Referring to the flow chart of Fig. 4, there will next be described in detail a diagnostic routine executed by the ECU 80 to diagnose the fuel-pressure sensor 71 for any defect. The diagnostic routine of Fig. 4 is initiated by the ECU 80 upon starting of the engine 1, and is repeatedly executed with a predetermined cycle time. In this diagnostic routine, the ECU 80 utilizes various kinds of data, which data have been obtained in the last cycle of execution of the fuel introduction control routine of Fig. 2, which is executed independently of the diagnostic routine. On the basis of the data obtained last in the fuel introduction control routine, the ECU 80 diagnoses the fuel-pressure sensor 71 to be normal or defective, according to the diagnostic routine of Fig. 4.

The diagnostic routine of Fig. 4 is initiated with step S201 in which the ECU 80 obtains the actual minimal exhaust-gas air/fuel ratio $A/F_{pksens}$, on the basis of the data obtained in the last cycle of execution of the fuel introduction control routine of Fig. 2 (hereinafter referred to as "last fuel introduction control data").

Then, step S202 is implemented to read in the fuel introduction amount Q determined in the last cycle of execution of the fuel introduction control routine. Step S202 is followed by step S203 to read in the intake air quantity Ga obtained on the basis of the output signal of the airflow meter 72 in the last cycle of execution of the fuel introduction control routine.

Then, the control flow goes to step S204 to obtain the base value $A/F_{base}$ of the exhaust-gas air/fuel ratio A/F on the basis of the last fuel introduction control data. Step S205 is then implemented to calculate a target minimal value $A/F_{pkcal}$ of the exhaust-gas air/fuel ratio A/F, which is expected to be established by the fuel introduction by the amount Q in step S103 in the last cycle of execution of the fuel introduction control routine. The target minimal value $A/F_{pkcal}$ is calculated on the basis of the fuel introduction amount Q, the intake air quantity Ga and the base value $A/F_{base}$ of the exhaust-gas air/fuel ratio A/F. In this respect, it is noted that step S103 of the fuel introduction control routine of Fig. 2 is formulated to determine the fuel introduction amount Q so that the exhaust-gas air/fuel ratio A/F is theoretically lowered to the target minimal value $A/F_{pkcal}$ by the fuel introduction of the determined amount Q.

Step S205 is followed by step S206 to determine whether the absolute value of a difference between the actual and target minimal air/fuel ratio values $A/F_{pksens}$ and $A/F_{pkcal}$ which have been obtained in steps S201 and S205, respectively, is smaller than a predetermined threshold A.

If an affirmative decision (YES) is obtained in step S206, it means that the actual value $A/F_{pksens}$ of the minimal exhaust-gas air/fuel ratio A/F is substantially the same as the target value $A/F_{pkcal}$. In this case, the control flow goes to step S207 to diagnose the fuel-pressure sensor 71 to be normally functioning.

If a negative decision (NO) is obtained in step S206, it means that the actual minimal air/fuel ratio value A/Fpksens deviates from the target value A/Fpkcal. In this case, the control flow goes to step S208 to diagnose the fuel-pressure sensor 71 to be defective. One cycle of execution of the diagnostic routine of Fig. 4 is terminated with step S207 or S208.

As described above, the diagnosing apparatus arranged to execute the diagnostic routine of Fig. 4 diagnoses the fuel-pressure sensor 71, on the basis of a degree or amount of deviation of the actual value $A/F_{pksens}$ of the minimal exhaust-gas air/fuel ratio A/F (as detected by the A/F ratio sensor 73), with respect to the target value A/Fpkcal that is expected to be established by the fuel introduction by the determined amount Q if the fuel-pressure sensor 71 is normally functioning.

The present diagnosing apparatus permits an exact and efficient diagnosis of the fuel-pressure sensor 71, assuring relatively early detection of a defect of the reducing-agent supplying device, namely, a defect of the fuel-pressure sensor 71 which prevents an appropriate treatment of the NOx catalyst 41 to recover its NOx absorbing or storing efficiency or ability. Thus, the diagnosing apparatus permits relatively early treatment of the defect.

There will be described a diagnosing apparatus constructed according to a second embodiment of this invention, which is applied to a reducing-agent supplying device provided for a diesel engine system.

The diagnosing apparatus according to the first embodiment is arranged to diagnose the fuel-pressure sensor 71 by comparing the actually detected minimal exhaust-gas air/fuel ratio $A/F_{pksens}$ with the theoretically calculated target value $A/F_{pkcal}$, when the fuel is introduced from the fuel introducing nozzle 17 into the exhaust system 40, with the cut-off valve 14 being held open, to recover the initial NOx absorbing ability of the NOx catalyst 41 according to the fuel introduction control routine of Fig. 2.

On the other hand, the diagnosing apparatus according to the second embodiment is arranged to diagnose the fuel-pressure sensor 71 (a part of the reducing-agent supplying device), by comparing the fuel pressure actually detected upon fuel introduction into the exhaust system 40 with the cut-off valve 14 held in the closed state, with a theoretically calculated target value.

The diagnosing apparatus according to the second embodiment is arranged to execute a fuel introduction control routine which incorporates a diagnosis of the fuel-pressure sensor 71. The engine 1 to which the present diagnosing apparatus is applied, the reducing-agent supplying device (including the fuel supply system 10), and the hardware arrangement of the ECU 80 (which constitutes a part of the present diagnosing apparatus) are substantially identical with those of the first embodiment described above by reference to Fig. 1, and redundant description of the hardware arrangements of the second embodiment will not be provided.

Referring to the flow chart of Fig. 5, there will be described in detail the fuel introduction control routine executed by the present diagnosing apparatus to introduce the fuel into the exhaust system 40 and to diagnose the fuel-pressure sensor 41.

The fuel introduction control routine of Fig. 5 is initiated by the ECU 80 upon starting of the engine 1, and repeatedly executed with a predetermined cycle time.

The routine of Fig. 5 is initiated with step S301 in which the ECU 80 obtains the operating condition of the engine 1, which is used to determine whether it is necessary to control the metering valve 16 to effect the fuel introduction into the exhaust system 40. Then, the control flow goes to step S302 to determine whether it is necessary to introduce the fuel into the exhaust system 40.

Operations to be performed in steps S301 and S302 are identical with those in steps S101 and S102 of the fuel introduction control routine of Fig. 2.

If an affirmative decision (YES) is obtained in step S302, the control flow goes to step S303. If a negative decision (NO) is obtained in step S302, one cycle of execution of the routine of Fig. 5 is terminated. Step S303 is provided to determine whether it is necessary to diagnose the fuel-pressure sensor 71 for any defect. If an affirmative decision (YES) is obtained in step S303, the control flow goes to step S304. If a negative decision (NO) is obtained in step S303, the control flow goes to step S306a, and one cycle of execution of the routine is terminated. In step S306a, the fuel is introduced into the exhaust system 40 in the normal manner while the cut-off valve 14 is placed in the open state.

Step S304 is implemented, before the fuel introduction into the exhaust system 40, to close the cut-off valve 14. The cut-off valve 14 is an emergency shut-off valve which is opened upon starting of the engine 1, and is kept in the open state unless any one of predetermined emergency conditions is satisfied. For instance, the cut-off valve 14 is closed when the fuel supply system 10 becomes defective.

As a result of opening of the cut-off valve 14, a portion of the secondary fuel supply passage P2 downstream of the cut-off valve 14 is disconnected from the fuel supply pump 11, and the pressure of the fuel in the downstream portion of the passage P2 is kept constant at a given level Pg. Step S304 is followed by step S305 to obtain a reference fuel pressure value B by subtracting a predetermined value from the fuel pressure Pg upon closing of the cut-off valve 14. The obtained reference fuel pressure value B is stored in the RAM 83.

Step S305 is followed by step S306b to open the metering valve 16 for a predetermined time for introducing the fuel through the fuel introducing nozzle 17 into the exhaust system 40. Step S306b is followed by step S307 to estimate an amount of consumption of the fuel in the secondary fuel supply passage P2 by the fuel introduction in step S306b, that is, estimate an amount of the fuel introduced into the exhaust system 40, on the basis of the fuel pressure Pg upon closure of the cut-off valve 14 and the above-indicated predetermined time of opening of the metering valve 16. The estimated amount of the fuel introduction is added to a stored sum of the estimated amounts obtained in step S307 in the previous cycles. A significance of this stored sum of the estimated amounts of the fuel introduction will be described in detail with respect to step S309.

Step S307 is followed by step S308 to determine whether the fuel pressure Pg upon closure of the cut-off valve 14 is lower than the reference fuel pressure value B obtained in step S305.

If an affirmative decision (YES) is obtained in step S308, the ECU 80 determines that the fuel supply system 10 is normal, and the control flow goes to step S311 to restore the cut-off valve 14 to the open state, and one cycle of execution of the routine of Fig. 5 is terminated.

If a negative decision (NO) is obtained in step S308, the control flow goes to step S309 to determine whether the stored sum of the estimated amounts of fuel introduction obtained in step S307 is larger than a predetermined threshold value C. Namely, the fuel pressure in the secondary fuel supply passage P2 is lowered as a result of the fuel introduction through the fuel introducing nozzle 17 in step S306b with the cut-off valve 14 placed in the open state. However, it cannot be said that the fuel supply system 10 is defective, even if the fuel pressure Pg has not lowered below the reference value B in one cycle of execution of the routine of Fig. 5. That is, the amount of the fuel introduced through the nozzle 17 in each implementation of step S306b is comparatively small, and varies depending upon the operating state of the engine 1.

In view of the above, the present fuel introduction control routine is formulated to be repeatedly executed to repeat step S306b to continue the fuel introduction with the metering valve 14 kept open, even if the negative decision (NO) is obtained in step S306, until the stored sum of the estimated amounts of fuel introduction, namely, the total fuel introduction amount Q has reached the predetermined value C. Thus, the present routine is arranged such that the determination in step S308 as to whether the fuel pressure Pg has been lowered below the reference value B is repeated when the negative decision (NO) is obtained in step S308, until the total fuel introduction amount Q has increased to the predetermined value C.

That is, if an affirmative decision (YES) is obtained in step S309 while the negative decision (NO) is obtained in step S308, it indicates that the fuel pressure Pg has not been normally lowered below the reference value B even when the total fuel introduction amount Q has increased to the target value C. In this case, therefore, the control flow goes to step S310 to determine that the fuel supply system 10 is defective. Step S310 is followed by step S311 to restore the cut-off valve 14 to the open state, and one cycle of execution of the routine is terminated.

If a negative decision (NO) is obtained in step S309, it indicates that the total fuel introduction amount Q has not reached the predetermined target value C. In this case, the diagnostic determination as to whether the fuel supply system 10 is defective or not is left pending, and the next cycle of execution of the routine is initiated.

It is noted that once the cut-off valve 14 is closed in step S304, the fuel introduction into the exhaust system 40 is effected with the cut-off valve 14 held in the closed state, until the cut-off valve 14 is opened in step S311. That is, the fuel introduction in sep S306a in the normal manner with the cut-off valve 14 placed in the open state is not effected, as long as the diagnosis of the fuel supply system 10 is required (as long as the affirmative decision is obtained in step S303).

The diagnosing apparatus arranged to execute the fuel introduction control routine of Fig. 5 according to the second embodiment permits accurate diagnosis of the fuel supply system 10.

Like the diagnosing apparatus according to the first embodiment, the second embodiment assures relatively early detection of a defect of the reducing-agent supplying device, namely, a defect of the fuel supply system 10 (fuel-pressure sensor 71) which prevents an appropriate treatment of the NOx catalyst 41 to recover its NOx absorbing or storing efficiency or ability. Thus, the diagnosing apparatus permits relatively early treatment to deal with the defect.

There will next be described a diagnosing apparatus constructed according to a third embodiment of this invention, which is applied to a reducing-agent supplying device provided for a diesel engine system.

The diagnosing apparatus according to the first embodiment is arranged to diagnose the fuel-pressure sensor 71 by comparing the actually detected air/fuel ratio A/F with the theoretically calculated target value, when the fuel is introduced from the fuel introducing nozzle 17 into the exhaust system 40.

On the other hand, the diagnosing apparatus according to the third embodiment is arranged to diagnose the components of the fuel supply device 10, by comparing the actual pattern of change of the exhaust-gas air/fuel ratio A/F with a normal or nominal pattern, upon fuel introduction into the exhaust system 40.

Like the diagnosing apparatus according to the second embodiment, the diagnosing apparatus according to the third embodiment is arranged to execute a fuel introduction control routine which incorporates a diagnosis of the fuel supply system 10.

The engine 1 to which the third embodiment is applied, the reducing-agent supplying device (including the fuel supply system 10), and the hardware arrangement of the ECU 80 (which constitutes a part of the present diagnosing apparatus) are substantially identical with those of the first embodiment described above by reference to Fig. 1, and redundant description of the hardware arrangements of the third embodiment will not be provided.

The time charts of Figs. 6-9 indicates changes of the exhaust-gas air/fuel ratio A/F upon the fuel introduction into the exhaust system 40 (as effected according to the fuel introduction control routine of Fig. 2) where the fuel supply system 10 is defective, as compared with those where the fuel supply system 10 is normally functioning.

Solid lines in the time charts of Figs. 6-9 indicate a temporary reduction of the exhaust-gas air/fuel ratio A/F from the nominal or base value $A/F_{base}$ to the minimal value, as discussed by reference to Fig. 3b, when the fuel is introduced through the fuel introducing nozzle 17 upon application of an electric current to the metering valve 16 to open the nozzle 17, where the fuel supply system 10 is entirely normal in its function.

Where the fuel supply pump 11 or metering valve 16 is defective, for instance, the exhaust-gas air/fuel ratio A/F is held substantially constant at the base value $A/F_{base}$, even when the fuel is introduced through the fuel introducing nozzle 17, as indicated by broken line in Fig. 6.

Where the output signal of the fuel-pressure sensor 71 is abnormal, the exhaust-gas air/fuel ratio A/F upon the fuel introduction through the nozzle 17 is temporarily lowered and then raised back to the base value $A/F_{base}$, at substantially the same timings and at substantially the same gradients, as where all components of the fuel supply system 10 are normally functioning, but the minimal value of the exhaust-gas air/fuel ratio A/F is considerably higher than that when all components of the fuel supply system 10 are normally functioning, as indicated by broken line in Fig. 7. In this case, the rich spike of the exhaust gas is not sufficient to recover the NOx catalyst 41. Described more specifically, an abnormality of the output signal of the fuel-pressure sensor 71 results in a failure to introduce the desired amount of the fuel as the reducing agent through the fuel introducing nozzle 17. The desired amount of the fuel that is introduced into the exhaust system 40 is principally determined by the pressure of the fuel to be introduced, and the time duration for which the metering valve 16 is held open. Accordingly, a failure of the fuel-pressure sensor 71 to correctly detect the fuel pressure results in an erroneous determination of the desired time duration for which the metering valve 16 is held open to introduce the desired amount of the fuel.

Where the fuel introducing nozzle 17 is defective, the exhaust-gas air/fuel ratio A/F changes in one of two different patterns, depending upon the cause for the defect. Where the closing action of the fuel introducing nozzle 17 is abnormal, the exhaust-gas air/fuel ratio A/F is lowered to the minimal value in substantially the same pattern as where all of the components of the fuel supply system 10 are normally functioning, as indicated by broken line in Fig. 8. However, the rate of rise of the air/fuel ratio A/F from the minimal value back to the base value $A/F_{base}$ is lower where the closing action of the nozzle 17 is abnormal, than where the components of the fuel supply system 10 are all normal.

Where the opening action of the fuel introducing nozzle 17 is abnormal, the rate of reduction of the exhaust-gas air/fuel ratio A/F after the initiation of the fuel introduction through the nozzle 17 is lower than where the fuel supply system 10 is normal, as indicated by broken line in Fig. 9. In this case, the minimal value of the air/fuel ratio A/F is higher than where the fuel supply system 10 is normal. That is, the rich spike is not sufficient.

As discussed above, the pattern of change of the exhaust-gas air/fuel ratio A/F during the fuel introduction into the exhaust system 40 varies depending upon the specific component of the fuel supply system 10 which is defective, or the cause of the defect. Namely, the fuel supply system 10 can be diagnosed for any defect, by comparing the actual rates of reduction and rise of the exhaust-gas air/fuel ratio A/F and the actual minimal value of the ratio A/F during the fuel introduction into the exhaust system 40, with the normal values where all the components of the system 10 are normally functioning. In addition, the comparison makes it possible to accurately pin-point the specific component of the system 10 which is defective or abnormal.

Referring next to the flow chart of Fig. 10, there will be described the fuel introduction control routine according to the third embodiment, which is initiated by the ECU 80 upon starting of the engine 1 and repeatedly executed with a predetermined cycle time.

The fuel introduction control routine of Fig. 10 is initiated with step S401 to obtain the operating condition of the engine 1, which is used to determine whether it is necessary to control the metering valve 16 to effect the fuel introduction into the exhaust system 40. Step S401 is followed by step S402 to determine whether it is necessary to effect the fuel introduction into the exhaust system 10.

The operations in steps S401 and S402 are substantially identical with those in steps S101 and S102 in the fuel introduction control routine of Fig. 2 of the first embodiment.

If an affirmative decision (YES) is obtained in step S402, the control flow goes to step S403. If a negative decision (NO) is obtained in step S403, one cycle of execution of the routine of Fig. 10 is terminated. Step S403 is provided to apply a commanded value of electric current to the metering valve 16 (as indicated in Fig. 3a), to effect the fuel introduction into the exhaust system 40. Further, the exhaust-gas air/fuel ratio A/F during the fuel introduction is continuously detected or monitored, and stored in the RAM 83.

Step S404 is then implemented to obtain a pattern of change of the exhaust-gas air/fuel ratio A/F, on the basis of the ratio A/F stored in step S403. Step S404 is followed by step S405 to diagnose the fuel supply pump 11, fuel-pressure sensor 71 and fuel introducing nozzle 17 of the fuel supply system 10, by evaluating the obtained pattern of change of the exhaust-gas air/fuel ratio A/F according to diagnostic standards as discussed above by reference to the time charts of Figs. 6-9.

Described differently, the nominal or normal pattern of change of the exhaust-gas air/fuel ratio A/F is estimated on the basis of the pattern of change of the electric current to be applied to the metering valve 16 for the fuel introduction into the exhaust system 40, and the fuel pressure Pg during the fuel introduction. The pattern of change of the electric current includes the time duration for which the electric current is applied to the metering valve 16, and the amount of electric current applied thereto. The pattern of change of the air/fuel ratio A/F obtained in step S404 is compared with the thus estimated nominal pattern, to effect a diagnosis of the fuel supply system 10, according to the following diagnostic standards:

(i) The fuel metering valve 16 is diagnosed to be defective, where the exhaust-gas air/fuel ratio A/F is held substantially constant at the base value $A/F_{base}$, during the period of the fuel introduction.

(ii) The fuel-pressure sensor 71 is diagnosed to be defective, where the actual minimal value of the exhaust-gas air/fuel ratio A/F during the fuel introduction is higher than the normal value, although the timings and rates of reduction and rise of the ratio A/F during the fuel introduction are normal.

(iii) The fuel introducing nozzle 17 is diagnosed to be abnormal in its closing action, where the rate of rise of the air/fuel ratio A/F back to the base value $A/F_{base}$ after the reduction of the A/F value to the minimal value during the fuel introduction is lower than the nominal value.

(iv) The fuel introducing nozzle 17 is diagnosed to be abnormal in its opening action, where the rate of reduction of the air/fuel ratio A/F to the minimal value after initiation of the fuel introduction is lower than the nominal value.

If none of the diagnostic standards are met, the fuel supply system 10 are diagnosed to be normal for all of its components 16, 71, 17.

One cycle of execution of the fuel introduction control routine of Fig. 10 by the ECU 80 is terminated with step S405.

The diagnosing apparatus arranged to execute the fuel introduction control routine of Fig. 10 permits a diagnosis of the metering valve 16, fuel-pressure sensor 71 and fuel introducing nozzle 17, on the basis of the pattern of change of the exhaust-gas air/fuel ratio A/F during the fuel introduction into the exhaust system 40. The ECU 80 is also arranged to determine that the fuel introduction control per se is abnormal, where the pattern of change of the exhaust-gas air/fuel ratio A/F deviates from the nominal pattern, even when the pattern of change does not indicate a defect of any one of the components 16, 71, 17.

Thus, the diagnosing apparatus according to the third embodiment of this invention permits an exact and efficient diagnosis of the fuel supply system 10, assuring relatively early detection of a defect of the reducing-agent supplying device which prevents an appropriate treatment of the NOx catalyst 41 to recover its NOx absorbing or storing efficiency or ability. Thus, the diagnosing apparatus permits relatively early treatment to deal with the defect.

There will further be described a diagnosing apparatus according to a fourth embodiment of this invention, which is applied to a reducing-agent supplying device provided for a diesel engine system.

The diagnosing apparatus according to the fourth embodiment is arranged to effect a diagnosis as to whether the fuel introduction nozzle 17 is clogged or plugged with soot or other foreign matters, depending upon whether the fuel introduction through the nozzle 17 causes a temporary reduction of the exhaust-gas air/fuel ratio A/F down to a desired minimal value, that is, depending upon whether the desired rich spike has been achieved by the fuel introduction through the nozzle 17. The present diagnosing apparatus is further arranged to effect a diagnosis as to whether the fuel supply pump 11 and the metering valve 16 are normally functioning, depending upon whether the fuel introduction through the nozzle 17 causes a sufficient rise of the fuel pressure in a portion of the secondary fuel supply passage P2 which is downstream of the metering valve 16.

A diesel engine 1' to which the diagnosing apparatus according to the fourth embodiment is applied is shown in the schematic view of Fig. 11.

The engine 1' is different from the engine 1 to which the first, second and third embodiments are applied, in that the engine 1' uses a fuel-pressure sensor 71' disposed at a position of the secondary fuel supply passage P2 downstream of the metering valve 16, and an A/F ratio sensor 73' disposed upstream of the catalyst casing 42 in the exhaust system 40, as shown in Fig. 11. In the other aspects, the engine 1' to which the fourth embodiment is applied, the reducing-agent supplying device (including the fuel supply system 10), and the hardware arrangement of the ECU 80 (which constitutes a part of the present diagnosing apparatus) are substantially identical with those of the first embodiment described above by reference to Fig. 1, and redundant description of the hardware arrangements of the second embodiment will not be provided.

Referring next to Fig. 12, there will be described a diagnostic routine executed by the ECU 80 according to the present fourth embodiment. The diagnostic routine of Fig. 12 is formulated to diagnose the fuel introducing nozzle 17, the fuel supply pump 11 and the metering valve 16, for any defect. The diagnostic routine of Fig. 12 is initiated by the ECU 80 upon starting of the engine 1', and repeatedly executed with a predetermined cycle time.

The diagnostic routine of Fig. 12 is initiated with step S501 to obtain the operating condition of the engine 1', which is used to determine whether it is necessary to control the metering valve 16 to effect the fuel introduction into the exhaust system 40. The operation in step S501 is substantially identical with the operation in step S101 of the fuel introduction control routine of Fig. 1.

Step S502 is then implemented to determine whether it is permitted to diagnose the fuel introducing nozzle 17, fuel supply pump 11 and metering valve 16. If an affirmative decision (YES) is obtained in step S502, the control flow goes to step S503. If a negative decision (NO) is obtained in step S502, one cycle of execution of the routine of Fig. 12 is terminated.

In the fourth embodiment, too, the ECU 80 is arranged to execute a fuel introduction control routine substantially identical with that of Fig. 2 which has been described with respect to the first embodiment. The fuel introduction (in step S103 of Fig. 2) in the fuel introduction control routine and the diagnosis in the present diagnostic routine of Fig. 12 are selectively or mutually exclusively effected. Namely, a negative decision (NO) is obtained in step S502 of the diagnostic routine of Fig. 12 while the fuel is introduced according to the fuel introduction control routine. Accordingly, the diagnosis in step S503 and the following steps of Fig. 12 is not permitted during the fuel introduction into the exhaust system 40. Conversely, the negative decision (NO) is obtained in step S102 of Fig. 2 while the diagnosis in step S503 and the following steps of Fig. 12 is effected with the affirmative decision (YES) obtained in step S502. Accordingly, the fuel introduction is not permitted during the diagnosis according to the diagnostic routine of Fig. 12.

Step S502 is followed by step S503 to apply a commanded value of electric current to the metering valve 16 for opening the metering valve 16 to effect the fuel introduction into the exhaust system 40. Then, step S504 is implemented to determine whether the fuel pressure Pg represented by the output signal of the fuel-pressure sensor 71' located downstream of the metering valve 16 has been raised to a level Pgo at which the fuel introducing nozzle 17 can be opened. If an affirmative decision (YES) is obtained in step S504, the control flow goes to step S505. If a negative decision (NO) is obtained in step S504, the control flow goes to step S508a in which the ECU 80 determines that the metering valve 160 or the fuel supply pump 11 is defective, and one cycle of execution of the diagnostic routine of Fig. 12 is terminated.

Step S505 is provided to obtain the exhaust-gas air/fuel ratio A/F at a position upstream of the NOx catalyst 41 in the exhaust system 40, on the basis of the output signal of the A/F ratio sensor 73'. The control flow then goes to step S506 to determine whether the exhaust-gas air/fuel ratio A/F is lower than a predetermined threshold D.

If an affirmative decision (YES) is obtained in step S506, the control flow goes to step S508b in which the ECU 80 determines that the fuel introducing nozzle 17, metering valve 16 and fuel supply pump 11 are all normally functioning, and one cycle of execution of the diagnostic routine is terminated.

If a negative decision (NO) is obtained in step S506, the control flow goes to step S507 to determine whether a time duration of the fuel introduction through the nozzle 17 (a time duration $\tau$ of the current application to the metering valve 16) is longer than a predetermined threshold E. If an affirmative decision (YES) is obtained in step S506, the control flow goes to step S508c in which the ECU 80 determines that the fuel introducing nozzle 17 is plugged with foreign matters, and one cycle of execution of the present diagnostic routine is terminated.

If a negative decision (NO) is obtained in step S506, the control flow goes to step S508d in which a predetermined value c is added to the time duration $\tau$ of the fuel introduction in step S503 of the present cycle of execution of the diagnostic routine. The thus obtained sum ($\tau$ + c) is used as the time duration for which the metering valve 16 is held open to effect the fuel introduction in the next cycle of execution of the present diagnostic routine. In this respect, it is noted that step S508d may be modified to increase the amount of opening of the metering valve 16, rather than increasing the time duration $\tau$, so that the pressure of the fuel to be delivered to the fuel introducing valve 17 to effect the fuel introduction in the next cycle of execution of the diagnostic routine is increased.

Described in detail, the negative decision (NO) in step S506 indicates a high possibility that the fuel introducing nozzle 17 is plugged with foreign matters. However, the nozzle 17 is not immediately diagnosed to be plugged with the foreign matters, if the time duration $\tau$ is not longer than the upper limit E. That is, when the negative decision (NO) is obtained in step S507, the time duration $\tau$ used in the next cycle is increased in step S508d, in an attempt to remove the foreign matters from the nozzle 17, which is considered to have been plugged or in the process of being plugged with the foreign matters. If the plugging is not removed after the time duration $\tau$ has been increased to exceed the upper limit E, the fuel introducing nozzle 17 is finally diagnosed to be plugged, in step S508c, with the affirmative decision(YES) obtained in step S507.

The present diagnosing apparatus arranged to execute the diagnostic routine described above permits exact and efficient diagnosis of the fuel introducing nozzle 17, metering valve 16 and fuel supply pump 11.

In addition, the present diagnosing apparatus is arranged to effect an early treatment to remove a functional defect (plugging) of the fuel introducing nozzle 17, while the removal of this defect is considered possible, and before the defect is aggravated to an incurable state. Thus, the present diagnosing apparatus permits a self remedy of the engine 1'.

In the present embodiment, the A/F ratio sensor 73' is disposed upstream of the NOx catalyst 41 in the exhaust system 40, so that the output signal of this sensor 73' is used to check in steps S505 and S506 whether a satisfactory "rich spike" is achieved as a result of the fuel introduction into the exhaust system 40. The location of the A/F ratio sensor 73' upstream of the NOx catalyst 41 is advantageous to assure a high degree of accuracy of checking of a change of the exhaust-gas air/fuel ratio A/F during the fuel introduction, namely, as to whether the air/fuel ratio A/F has been temporarily lowered to a sufficiently low minimal value. However, the present fourth embodiment may use the A/F ratio sensor 70 disposed downstream of the NOx catalyst 41 in the exhaust system 40, as in the first through third embodiments, so that a diagnostic routine similar to the diagnostic routine of Fig. 12 is executed on the basis of the output signal of the A/F ratio sensor 73. This modification has substantially the same diagnostic result as the fourth embodiment of Fig. 12.

The diagnostic routine of Fig. 12 according to the fourth embodiment is formulated to implement step S506 to determine whether the exhaust-gas A/F ratio A/F is lower than the predetermined threshold D, in order to check if the air/fuel ratio A/F has been temporarily lowered so as to cause a satisfactory rich spike of the exhaust emission as a result of the fuel introduction into the exhaust system 40. However, the diagnostic routine of Fig. 12 may be modified to check the minimal value of the exhaust-gas air/fuel ratio A/F or the degree of the rich spike, on the basis of a difference of the minimal value of the air/fuel ratio A/F detected in the present cycle of execution of the diagnostic routine, from that detected in the last cycle of execution. The difference between the minimal values of the ratio A/F detected in the two successive cycles of execution of the diagnostic routine may be replaced by a ratio of the two minimal values, or a rate of reduction and/or a rate of increase of the ratio A/F between the two successive cycles.

The fuel-pressure sensor 71' disposed downstream of the metering valve 16 may be replaced by a fuel-pressure sensor disposed upstream of the metering valve 16, so that the fuel supply pump 11 is diagnosed on the basis of the fuel pressure detected by this upstream fuel-pressure sensor before the fuel introduction into the exhaust system 40. In this modified arrangement, the diagnostic routine is formulated to determine that the fuel supply pump 11 is defective, if the fuel pressure upstream of the metering valve 16 before the fuel introduction is not higher than a predetermined threshold. The same modified arrangement may be adapted to determine that the metering valve 16 is defective, if the fuel pressure upstream of the metering valve 16 is not temporarily lowered during the fuel introduction as indicated in Fig. 3c by way of example, even if the fuel pressure upstream of the metering valve 16 before the fuel introduction is higher than the predetermined threshold.

There will further be described a diagnosing apparatus according to a fifth embodiment of this invention, which is applied to a reducing-agent supplying device provided for a diesel engine system.

The diagnosing apparatus according to the fifth embodiment is arranged to effect a diagnosis as to whether the fuel supply pump 11 and the metering valve 16 are normally functioning, depending upon whether the fuel pressure detected upstream of the metering valve 16 of the secondary fuel supply passage P2 changes in a normal pattern between the moments of initiation and termination of the fuel introduction into the exhaust system 40.

The engine 1' to which the fifth embodiment is applied, the reducing-agent supplying device (including the fuel supply system 10), and the hardware arrangement of the ECU 80 (which constitutes a part of the present diagnosing apparatus) are substantially identical with those of the fourth embodiment described above by reference to Fig. 11, and redundant description of the hardware arrangements of the second embodiment will not be provided.

Referring next to Fig. 13, there will be described a diagnostic routine executed by the ECU 80 according to the present fifth embodiment. The diagnostic routine of Fig. 13 is formulated to diagnose the fuel introducing nozzle 17, the fuel supply pump 11 and the metering valve 16, for any defect. The diagnostic routine of Fig. 13 is initiated by the ECU 80 upon starting of the engine 1', and repeatedly executed with a predetermined cycle time.

The diagnostic routine of Fig. 13 is initiated with step S601 to obtain the operating condition of the engine 1', which is used to determine whether it is necessary to control the metering valve 16 to effect the fuel introduction into the exhaust system 40. The operation in step S601 is substantially identical with the operation in step S101 of the fuel introduction control routine of Fig. 1.

Step S602 is then implemented to determine whether it is permitted to diagnose the fuel introducing nozzle 17, fuel supply pump 11 and metering valve 16. If an affirmative decision (YES) is obtained in step S602, the control flow goes to step S603. If a negative decision (NO) is obtained in step S602, one cycle of execution of the routine of Fig. 13 is terminated.

In the fifth embodiment, too, the ECU 80 is arranged to execute a fuel introduction control routine substantially identical with that of Fig. 2 which has been described with respect to the first embodiment. The fuel introduction (in step S103 of Fig. 2) in the fuel introduction control routine and the diagnosis in the present diagnostic routine of Fig. 13 are selectively or mutually exclusively effected. Namely, a negative decision (NO) is obtained in step S602 of the diagnostic routine of Fig. 13 while the fuel is introduced according to the fuel introduction control routine. Accordingly, the diagnosis in step S603 and the following steps of Fig. 13 is not permitted during the fuel introduction into the exhaust system 40. Conversely, the negative decision (NO) is obtained in step S102 of Fig. 2 while the diagnosis in step S603 and the following steps of Fig. 13 is effected with the affirmative decision (YES) obtained in step S602. Accordingly, the fuel introduction is not permitted during the diagnosis according to the diagnostic routine of Fig. 13.

Step S602 is followed by step S603 to apply a commanded value of electric current to the metering valve 16 for opening the metering valve 16 to effect the fuel introduction into the exhaust system 40. Further, the ECU 80 continuously monitors and stores the fuel pressure Pg downstream of the metering valve 16 of the secondary fuel supply passage P2, on the basis of the output signal of the fuel-pressure sensor 71', between the moments of initiation and termination of the fuel introduction into the exhaust system 40.

Step S603 is followed by step S604 to determine (1) whether the fuel pressure Pg downstream of the metering valve 16 of the secondary fuel supply passage P2 is kept not lower than a threshold value Pgo (above which the fuel introducing nozzle 17 can be opened) during the entire period of the fuel introduction, and (2) whether the fuel pressure Pg downstream of the metering valve 16 has been lowered below the threshold value Pgo after the termination of the fuel introduction. If the two conditions (1) and (2) are both satisfied, the control flow goes to step S605 to determine that the fuel introducing nozzle 17, metering valve 16 and fuel supply pump 11 are all normally functioning, and one cycle of execution of the diagnostic routine of Fig. 13 is terminated.

If either one of the two conditions (1) and (2) is not satisfied, a negative decision (NO) is obtained in step S604, and the control flow goes to step S606 in which the ECU 80 determines whether the time duration $\tau$ for which the fuel is injected through the fuel introducing nozzle 17 (for which the metering valve 16 is held open with an electric current applied thereto) in this control cycle is longer than the predetermined upper limit E. If an affirmative decision (YES) is obtained in step S606, the control flow goes to step S607 in which the ECU 80 diagnoses the fuel introducing nozzle 17 to be plugged with foreign matters, and one cycle of execution of the diagnostic routine of Fig. 13 is terminated.

If a negative decision (NO) is obtained in step S606, the control flow goes to step S608 in which a predetermined value c is added to the time duration $\tau$ of the fuel introduction in step S603 of the present cycle of execution of the diagnostic routine. The thus obtained sum ($\tau$ + c) is used as the time duration for which the metering valve 16 is held open to effect the fuel introduction in the next cycle of execution of the present diagnostic routine. In this respect, it is noted that step S508 may be modified to increase the amount of opening of the metering valve 16, rather than increasing the time duration $\tau$, so that the pressure of the fuel to be delivered to the fuel introducing valve 17 to effect the fuel introduction in the next cycle of execution of the diagnostic routine is increased.

Described in detail, the negative decision (NO) in step S604 indicates a high possibility that the fuel introducing nozzle 17 is plugged with foreign matters. However, the nozzle 17 is not immediately diagnosed to be plugged with the foreign matters, if the time duration $\tau$ is not longer than the upper limit E. That is, when the negative decision (NO) is obtained in step S606, the time duration $\tau$ used in the next cycle is increased in step S508, in an attempt to remove the foreign matters from the nozzle 17, which is considered to have been plugged or in the process of being plugged with the foreign matters. If the plugging is not removed after the time duration $\tau$ has been increased to exceed the upper limit E, the fuel introducing nozzle 17 is finally diagnosed to be plugged, in step S607, with the affirmative decision (YES) obtained in step S606.

The present diagnosing apparatus arranged to execute the diagnostic routine described above permits exact and efficient diagnosis of the fuel introducing nozzle 17, metering valve 16 and fuel supply pump 11.

In addition, the present diagnosing apparatus is arranged to effect an early treatment to remove a functional defect (plugging) of the fuel introducing nozzle 17, while the removal of this defect is considered possible, and before the defect is aggravated to an incurable state. Thus, the present diagnosing apparatus permits a self remedy of the engine 1'.

The diagnosing apparatuses of the illustrated embodiments described above may include alarm indicators corresponding to the respective components of the fuel supply system 10 that are to be diagnosed, so that in the event of detection of a defect of any one of the components in question, the corresponding alarm indicator is activated to inform the operator of the engine 1 or 1' of the defective component. For instance, an alarm light is activated to blink when the corresponding component is diagnosed to be defective.

In the illustrated embodiments, the temperature Tex of the exhaust emission as detected by the exhaust-gas temperature sensor 74 disposed downstream of the catalyst casing 42 in the exhaust system 40 is used as one of the operating parameters of the engine 1 (1') which are obtained by the ECU 80 prior to the fuel introduction into the exhaust system 40. However, an exhaust-gas temperature sensor may be disposed upstream of the catalyst housing 42, or within the exhaust port of each cylinder 20, so that the output signal of this temperature sensor is used to obtain the temperature within the exhaust system 40. Alternatively, the operating speed Ne of the engine 1 (1'), the operating amount Acc of the accelerator pedal and other operating parameters of the engine may be used to estimate the temperature within the exhaust system 40 (temperature within the exhaust port of each combustion chamber 20, or temperature upstream or downstream of the catalyst casing 42), so that the estimated temperature is used in place of the exhaust-gas temperature Tex indicated above.

In the illustrated embodiments, the fuel (gas oil or light oil) used for operating the diesel engine is used as the reducing agent to be supplied into the exhaust emission to reduce NOx contained in the exhaust emission. However, gasoline, kerosene or other educing agents which are capable of reducing NOx may be used.

While the illustrated embodiments use the NOx catalyst 41 of storage-reduction type, an NOx catalyst of so-called selective reduction type may be used in place of the NOx catalyst 41 of the storage-reduction type. Namely, the diagnosing apparatus according to the principle of the present invention is applicable, with the same or substantially the same advantage as in the illustrated embodiments, to a reducing-agent supplying device of an emission purifying apparatus employing any type of catalyst which is capable of removing NOx in an exhaust emission from an internal combustion engine, such that the efficiency of reduction of NOx by the catalyst varies with a content of the reducing components in the exhaust emission, or a content of any other component (e.g, oxygen concentration) which relates to the content of the reducing agent.

In the engine 1 (1') to which the illustrated embodiments are applied, the fuel supply pump 11 provided to deliver the fuel from the fuel tank to the common rail 12 is utilized by the reducing-agent supplying device, for delivering a portion of the fuel delivered from the pump 11 is introduced as the reducing agent into the exhaust system 40. However, the reducing-agent supplying device may use an exclusive device for supplying the exhaust system 40 with the fuel or reducing agent delivered directly from a suitable tank or reservoir, independently of a fuel supply system provided to supply the engine with the fuel.

In the reducing-agent supplying device to be diagnosed by the diagnosing apparatus of the illustrated embodiments, the opening and closing actions of the fuel introducing nozzle 17 are controlled by controlling the metering valve 16 so as to control the pressure of the fuel delivered through the secondary fuel supply passage P2 to the nozzle 17. However, the reducing-agent supplying device may use, as a fuel introducing valve, a solenoid-operated valve whose opening and closing actions are directly controlled by the ECU 80 by controlling an amount of electric current to be applied to the valve, as in the fuel injector valves 13.

The illustrated embodiments are applied to the reducing-agent supplying device in the internal combustion engine in the form of the diesel engine 1 (1') of inline four-cylinder type. However, the principle of the present invention is equally applicable to a reducing-agent supplying device in a lean-burn gasoline engine. The engine having the reducing-agent supplying device is not limited to the inline four-cylinder type.

The diagnosing apparatus constructed according to the principle of this invention is arranged to diagnose the reducing-agent supplying device, depending upon whether the actual state of the exhaust emission from the internal combustion engine after the introduction of a reducing agent into the exhaust system of the engine deviates from the nominal or normal state. Accordingly, the present diagnosing apparatus permits a high degree of reliability in the diagnosis of the reducing-agent supplying device, assuring relatively early detection of a defect of the reducing-agent supplying device, which defect prevents an appropriate treatment of the reducing catalyst to recover its reducing efficiency or ability. Thus, the present diagnosing apparatus permits relatively early treatment to deal with the defect.

The reducing-agent supplying device to be diagnosed by the diagnosing apparatus of the present invention is adapted to supply reducing agent to the reducing catalyst provided in the exhaust system of the internal combustion engine. The diagnosing apparatus of the invention is capable of accurately locating a defect in the reducing-agent supplying device, assuring early treatment to deal with the defect for recovering the reducing catalyst.

While the presently preferred embodiments of the present invention have been described above by reference to the accompanying drawings, for illustrative purpose only, it is to be understood that the invention is not limited to the illustrated embodiments, but may be embodied with various changes and modifications which may occur to those skilled in the art, without departing from the spirit and scope of the invention. It is also to be understood that the present invention may be embodied with suitable combinations and configurations of elements other than the specific combinations and configurations in the illustrated embodiments.

## Claims

1. A diagnosing apparatus for diagnosing a reducing-agent supplying device (10) as operable to introduce a reducing agent into an exhaust system (40) of an internal combustion engine (1, 1'),

    said reducing-agent supplying device including (a) reducing-agent introducing means (17) for introducing said reducing agent into a portion of said exhaust system which is upstream of a reducing catalyst (41), (b) supply-amount determining means (80) for determining an amount (Q) of said reducing agent to be introduced into said exhaust system (40), such that an actual state of an exhaust emission discharged from said internal combustion engine coincides with a nominal state, (c) supply-amount controlling means (16, 80) for controlling said reducing-agent introducing means (17) to introduce said reducing agent by the amount (Q) determined by said supply-amount determining means, (d) a reducing-agent passage (P2) for feeding said reducing agent to said reducing-agent introducing means (17), and (e) delivering means (11) for pressuring said reducing agent and delivering the pressurized reducing agent through said reducing-agent passage (P2) to said reducing-agent introducing means (17), and

    said diagnosing apparatus being **characterized by** comprising:

    emission-state detecting means (73, 73', 80) for detecting the actual state of said exhaust emission;
    pressure detecting means (71, 71') for detecting a pressure (Pg) of said pressurized reducing agent in said reducing-agent passage (P2), and diagnosing means (80) for diagnosing said reducing-agent supplying device, on the basis of said pressure (Pg) detected by said pressure detecting means (71, 71') and said actual state of said exhaust emission detected by said emission-state detecting means (73, 73') after initiation of introduction of said reducing agent into said exhaust system by said reducing-agent introducing means (17), as compared with said nominal state.

2. A diagnosing apparatus according to claim 1, **characterized in that** said emission-state detecting means (71, 71', 80) detects at least one of: a minimal value to which an oxygen concentration of said exhaust emission is lowered as a result of introduction of said reducing agent into said exhaust system; a rate of change of said oxygen concentration during the introduction of the reducing agent into said exhaust system; a maximal value to which a concentration of reducing components contained in said exhaust emission is increased as a result of introduction of the reducing agent into said exhaust system; and a rate of change of the concentration of said reducing components during the introduction of the reducing agent into said exhaust system.

**3.** A diagnosing apparatus according to claim 1 or 2, **characterized in that** said diagnosing means (80) diagnoses said reducing-agent supplying device (10), on the basis of an amount of reduction of the pressure of the reducing agent in said reducing-agent passage (P2) as a result of introduction of the reducing agent by said reducing-agent introducing means (17).

**4.** A diagnosing apparatus according to claim 3,

said reducing-agent supplying device (10) further including a cut-off valve (14) having an open state for permitting said pressurized reducing agent to be delivered from said delivering means (11) to said reducing-agent introducing means (17), and a closed state for inhibiting said pressurized reducing agent from being delivered from said delivering means to said reducing-agent introducing means,

said supply-amount determining means (80) determining said amount (Q) of reducing agent to be introduced into said exhaust system (40) on the basis of said pressure (Pg) detected by said pressure detecting means (71, 71'), and

said diagnosing apparatus being **characterized in that** said diagnosing means diagnoses said pressure detecting means (71, 71') on the basis of a difference between the pressure of the pressurized reducing agent in said reducing-agent passage (P2) detected when the reducing agent is introduced by said reducing-agent introducing means (17) while said cut-off valve (14) is placed in said open state, and the pressure of the pressurized reducing agent in said reducing-agent passage (P2) detected when the reducing agent is introduced by said reducing-agent introducing means (17) while said cut-off valve (14) is placed in said closed state, said diagnosing means diagnosing said pressure detecting means (71, 71') such that a defect of said pressure detecting means is distinguished from defects of other components (11, 16, 17) of said reducing-agent supplying device (10).

**5.** A diagnosing apparatus according to any one of claims 1-3,

said supply-amount determining means (80) determining said amount (Q) of reducing agent to be introduced into said exhaust system (40) on the basis of said pressure (Pg) detected by said pressure detecting means (71, 71'), and

said diagnosing apparatus being **characterized in that** said diagnosing means diagnoses said pressure detecting means (71, 71') such that a defect of said pressure detecting means is distinguished from defects of other components (11, 16, 17) of said reducing-agent supplying device (10).

**6.** A diagnosing apparatus according to any one of claims 1-3, **characterized in that** said diagnosing means diagnose said supply-amount control means (16) such that a defect of said supply-amount control means is distinguished from defects of other components (11, 17, 71, 71') of said reducing-agent supplying device (10).

**7.** A diagnosing apparatus according to any one of claims 1-3, **characterized in that** said diagnosing means diagnoses said delivering means (11) such that a defect of said delivering device is distinguished from defects of other components (16, 17, 71, 71') of said reducing-agent supplying device (10).

**8.** A diagnosing apparatus according to any one of claims 1-3, **characterized in that** said diagnosing means diagnoses said reducing-agent introducing means (17) such that a defect of said reducing-agent introducing means is distinguished from defects of other components (11, 16, 71, 71') of said reducing-agent supplying device (10).

**9.** A diagnosing apparatus according to claim 8, **characterized by** further comprising treating means (80) operable when said diagnosing means diagnoses said reducing-agent introducing means (17) as defective, said treating means effecting a treatment (S507, S508d; S606, S608) to remove said defect of said reducing-agent introducing means.

**10.** A diagnosing apparatus according to claim 9,

said reducing-agent introducing means including a reducing-agent introducing nozzle (17) for injecting said reducing agent into said exhaust system (40), and

said diagnosing apparatus being **characterized in that** said treating means (80) is operable, upon determination by said diagnosing means (80) that said reducing-agent introducing nozzle is plugged with foreign matters, to remove said foreign matters from said nozzle.

**11.** A diagnosing apparatus according to claim 10, **characterized in that** said treating means (80) gradually increases an amount of said reducing agent to be introduced through said reducing-agent introducing nozzle (17), after said diagnosing means determines that said nozzle is plugged with the foreign matters.

**12.** A method of diagnosing a reducing-agent supplying device (10) as operable to introduce a reducing agent into an exhaust system (40) of an internal combustion engine (1, 1'), **characterized by** comprising the steps of:

detecting an actual state of an exhaust emission discharged from said internal combustion engine, after initiation of introduction of said reducing agent into said exhaust system (40); and

diagnosing said reducing-agent supplying device on the basis of an amount of reduction of the pressure of said reducing agent in a reducing-agent passage (P2) provided for feeding the reducing agent and the detected actual state of said exhaust emission as compared with a nominal state when said reducing-agent supplying device is normal.

**13.** A method according to claim 12, **characterized in that** said step of detecting said actual state of said exhaust emission comprises detecting at least one of: a minimal value to which an oxygen concentration of said exhaust emission is lowered as a result of introduction of said reducing agent into said exhaust system; a rate of change of said oxygen concentration during the introduction of the reducing agent into said exhaust system; a maximal value to which a concentration of reducing components contained in said exhaust emission is increased as a result of introduction of the reducing agent into said exhaust system; and a rate of change of the concentration of said reducing components during the introduction of the reducing agent into said exhaust system.

**14.** A method according to claim 12, **characterized in that** said step of diagnosing said reducing-agent supplying device (10) comprises detecting a defect that a reducing-agent introducing nozzle (17) provided to introduce the reducing agent into said exhaust system (40) is plugged with foreign matters, said method further comprising a step of gradually increasing an amount of said reducing agent to be introduced through said reducing-agent introducing nozzle (17), after said nozzle is diagnosed to be plugged with the foreign matters, so that the foreign matters are removed from said nozzle.

**Patentansprüche**

**1.** Diagnosevorrichtung zum Diagnostizieren einer Reduktionsmittelversorgungsvorrichtung (10), welche zum Injizieren eines Reduktionsmittels in das Abgassystem (40) einer Brennkraftmaschine mit Innenverbrennung (1, 1') verwendet wird und zu welcher mehrere Einheiten gehören, (a) eine Reduktionsmittelinjektionseinheit (17) zum Injizieren des Reduktionsmittels in das Abgassystem vor dem in diesem angeordneten Reduktionskatalysator (41), (b) eine Injektionsmengebestimmungseinheit (80) zum Bestimmen der Menge (Q) des in das Abgassystem (40) zu injizierenden Reduktionsmittels, um den tatsächlichen Zustand des aus der Brennkraftmaschine mit Innenverbrennung emittierten Abgases auf den Sollzustand zu bringen, (c) eine Steuereinheit (16, 80) zum Steuern der Reduktionsmittelinjektionseinheit (17) zwecks Injizierens der von der Injektionsmengebestimmungseinheit bestimmten Reduktionsmittelmenge (Q) in das Abgassystem, (d) ein Reduktionsmittelkanal (P2) zum Zuführen des Reduktionsmittels zur Reduktionsmittelinjektionseinheit (17) und (e) eine Reduktionsmittelzuführeinheit (11) zum Zuführen des Reduktionsmittels unter Druck durch den Reduktionsmittelkanal (P2) zur Reduktionsmittelinjektionseinheit (17), wobei die Diagnosevorrichtung **dadurch gekennzeichnet ist, daß** diese drei Einheiten aufweist,
eine Emissionszustanderfassungseinheit (73, 73', 80) zum Erfassen des tatsächlichen Zustandes des emittierten Abgases, eine Druckerfassungseinheit (71, 71') zum Erfassen des Drucks (Pg) des der Reduktionsmittelinjektionseinheit (17) durch den Reduktionsmittelkanal (P2) zugeführten Reduktionsmittels und
eine Diagnoseeinheit zum Diagnostizieren der Reduktionsmittelversorgungsvorrichtung durch Vergleichen des von der Druckerfassungseinheit (71, 71') erfaßten Drucks (Pg) und des von der Abgasemissionszustanderfassungseinheit (73, 73') erfaßten tatsächlichen Zustandes des emittierten Abgases nach dem Injizieren des Reduktionsmittels von der Reduktionsmittelinjektionseinheit (17) in das Abgassystem mit den Sollwerten.

**2.** Diagnosevorrichtung gemäß Anspruch 1, **dadurch gekennzeichnet, daß** die Abgasemissionszustanderfassungseinheit (71, 71', 80) mehrere Parameter erfaßt, den durch Injizieren des Reduktionsmittels in das Abgassystem erreichten Minimalwert der Sauerstoffkonzentrationsverringerung des emittierten Abgases, die Änderungsrate der Sauerstoffkonzentration während des Injizierens des Reduktionsmittels in das Abgassystem, den durch Injizieren des Reduktionsmittels in das Abgassystem erreichten Maximalwert der Sauerstoffkonzentrationserhöhung des emittierten Abgases oder/und die Konzentrationsänderungsrate der Reduktionsmittelkomponenten während des Injizierens des Reduktionsmittels in das Abgassystem.

**3.** Diagnosevorrichtung gemäß Anspruch 1 oder 2, **dadurch gekennzeichnet, daß**
die Diagnoseeinheit (80) die Reduktionsmittelversorgungsvorrichtung auf der Grundlage der Druckverringerung des Reduktionsmittels im Reduktionsmittelkanal (P2) als Ergebnis des von der Reduktionsmittelinjektionseinheit (17) durchgeführten Injizierens des Reduktionsmittels in das Abgassystem diagnostiziert.

**4.** Diagnosevorrichtung gemäß Anspruch 3, wobei zur Reduktionsmittelversorgungsvorrichtung (10) außerdem ein Abschaltventil (14) gehört, welches im geöffneten Zustand der Zuführeinheit (11) das Zuführen des Reduktionsmittels unter Druck zur Reduktionsmittelinjektionseinheit (17) ermöglicht und im geschlossenen Zustand die Zuführung des Reduktionsmittels zur Reduktionsmittelinjektionseinheit unterbindet, wobei die Injektionsmengebestimmungseinheit (80) die Menge (Q) des in das Abgassystem (40) zu injizierenden Reduktionsmittels auf der Grundlage des von der Druckerfassungseinheit (71, 71') erfaßten Drucks (Pg) bestimmt und
die Diagnosevorrichtung **dadurch gekennzeichnet ist, daß** die Diagnoseeinheit die Druckerfassungseinheit (71, 71') auf der Grundlage der Differenz zwischen dem beim Injizieren des Reduktionsmittels von der Reduktionsmittelinjektionseinheit (17) in das Abgassystem bei geöffnetem Abschaltventil (14) im Reduktionsmittelkanal (P2) herrschenden Druck und dem beim Injizieren des Reduktionsmittels von der Reduktionsmittelinjektionseinheit (17) in das Abgassystem bei geschlossenem Abschaltventil (14) im Reduktionsmittelkanal (P2) herrschenden Druck diagnostiziert und in der Lage ist, einen Defekt der Druckerfassungseinheit von Defekten anderer Einheiten (11, 16, 17) der Reduktionsmittelversorgungsvorrichtung (10) zu unterscheiden.

**5.** Diagnosevorrichtung gemäß einem der Ansprüche 1-3, wobei die Injektionsmengebestimmungseinheit (80) die Menge (Q) des in das Abgassystem zu injizierenden Reduktionsmittels auf der Grundlage des von der Druckerfassungseinheit (71, 71') erfaßten Drucks (Pg) bestimmt und
die Diagnosevorrichtung **dadurch gekennzeichnet ist, daß** die Diagnoseeinheit in der Lage ist, zwischen einem Defekt der Druckerfassungseinheit (71, 71') und Defekten anderer Einheiten (11, 16, 17) der Reduktionsmittelversorgungsvorrichtung (10) zu unterscheiden und aus diesen Unterschieden eine defekte Druckerfassungseinheit (71, 71') zu diagnostizieren.

**6.** Diagnosevorrichtung gemäß einem der Ansprüche 1-3, **dadurch gekennzeichnet, daß**
die Diagnoseeinheit in der Lage ist, zwischen einem Defekt der Steuereinheit (16) und Defekten anderer Einheiten (11, 17, 71, 71') der Reduktionsmittelversorgungsvorrichtung (10) zu unterscheiden und aus diesen Unterschieden eine defekte Steuereinheit zu diagnostizieren.

**7.** Diagnosevorrichtung gemäß einem der Ansprüche 1-3, **dadurch gekennzeichnet, daß**
die Diagnoseeinheit in der Lage ist, zwischen einem Defekt der Reduktionsmittelzuführeinheit (11) und Defekten anderer Einheiten (16, 17, 71, 71') der Reduktionsmittelversorgungsvorrichtung (10) zu unterscheiden und aus diesen Unterschieden eine defekte Reduktionsmittelzuführeinheit zu diagnostizieren.

**8.** Diagnosevorrichtung gemäß einem der Ansprüche 1-3, **dadurch gekennzeichnet, daß**
die Diagnoseeinheit in der Lage ist, zwischen einem Defekt der Reduktionsmittelinjektionseinheit (17) und Defekten anderer Einheiten (11, 16, 71, 71') der Reduktionsmittelversorgungsvorrichtung (10) zu unterscheiden und aus den Unterschieden eine defekte Reduktionsmittelinjektionseinheit zu diagnostizieren.

**9.** Diagnosevorrichtung gemäß Anspruch 8, **dadurch gekennzeichnet, daß** diese außerdem
eine Behandlungseinheit (80) aufweist, welche zum Beseitigen eines von der Diagnoseeinheit an der Reduktionsmittelinjektionseinheit (17) ermittelten Defekts (S507, S508d, S606, S608) zugeschaltet wird.

**10.** Diagnosevorrichtung gemäß Anspruch 9, wobei zur Reduktionsmittelinjektionseinheit eine Düse (17) zum Injizieren des Reduktionsmittels in das Abgassystem (40) gehört und
die Diagnosevorrichtung **dadurch gekennzeichnet ist, daß**
die Behandlungseinheit (80) zugeschaltet wird, wenn die Diagnoseeinheit (80) eine Verstopfung der Düse durch Fremdstoffe ermittelt, um diese aus der Düse zu entfernen.

**11.** Diagnosevorrichtung gemäß Anspruch 10, **dadurch gekennzeichnet, daß**
die Behandlungseinheit (80) die Menge des durch die Düse in das Abgassystem zu injizierenden Reduktionsmittels allmählich erhöht, nachdem von der Diagnoseeinheit eine Verstopfung der Düse durch Fremdstoffe ermittelt wurde.

**12.** Verfahren zum Diagnostizieren einer Reduktionsmittelversorgungsvorrichtung (10), welche zum Injizieren eines Reduktionsmittels in das Abgassystem (40) einer Brennkraftmaschine mit Innenverbrennung (1, 1') verwendet wird, **gekennzeichnet durch** die Schritte
Erfassen des tatsächlichen Zustandes des aus der Brennkraftmaschine mit Innenverbrennung ausgestoßenen Abgases nach dem Auslösen des Injizierens des Reduktionsmittels in das Abgassystem (40) und
Diagnostizieren der Reduktionsmittelversorgungsvorrichtung **durch** Vergleichen der erfaßten Druckverringerung des Reduktionsmittels im Reduktionsmittelzuführkanal (P2) und des erfaßten tatsächlichen Abgaszustandes mit den Sollwerten bei normaler Arbeitsweise dieser Vorrichtung.

**13.** Verfahren gemäß Anspruch 12, **dadurch gekennzeichnet, daß** der Schritt des Erfassens des tatsächlichen Abgaszustandes das Erfassen der durch Injizieren des Reduktionsmittels in das Abgassystem auf den Minimalwert verringerten Sauerstoffkonzentration im Abgas, der Änderungsrate der Sauerstoffkonzentration während des Injizierens des Reduktionsmittels in das Abgassystem, der durch Injizieren des Reduktionsmittels in das Abgassystem auf den Maximalwert erhöhten Konzentration der Reduktionskomponenten im Abgas oder/und der Änderungsrate der Reduktionskomponentenkonzentration während des Injizierens des Reduktionsmittels in das Abgassystem aufweist.

**14.** Verfahren gemäß Anspruch 12, **dadurch gekennzeichnet, daß** der Schritt des Diagnostizierens der Reduktionsmittelversorgungsvorrichtung (10) das Erfassen einer Verstopfung der zum Injizieren des Reduktionsmittels in das Abgassystem (40) dienenden Düse (17) mit Fremdstoffen aufweist und das Verfahren außerdem den Schritt einer allmählichen Erhöhung der Menge des durch die Düse (17) in das Abgassystem zu injizierenden Reduktionsmittels zum Beheben einer ermittelten Verstopfung der Düse durch Beseitigen der in dieser abgelagerten Fremdstoffe aufweist.

## Revendications

**1.** Dispositif de diagnostic pour un dispositif d'alimentation en un agent réducteur (10) fonctionnant pour introduire un agent réducteur dans un système d'échappement (40) d'un moteur à combustion interne (1, 1'),

ledit dispositif d'alimentation en un agent réducteur comprenant (a) un moyen d'introduction de l'agent réducteur (17) pour introduire ledit agent réducteur dans une partie dudit système d'échappement qui est en amont d'un catalyseur réducteur (41), (b) un moyen de détermination de la quantité à alimenter (80) pour déterminer une quantité (Q) dudit agent réducteur à introduire dans ledit système d'échappement (40), de telle façon qu'un état réel corresponde d'une émission d'échappement déchargée depuis ledit moteur à combustion interne coincide avec un état nominal, (c)un moyen de commande de la quantité alimentée (16, 80) pour commander ledit moyen d'introduction d'agent réducteur (17) pour introduire ledit agent réducteur selon la quantité (Q) déterminée par ledit moyen de détermination de la quantité alimentée, (d) un passage d'agent réducteur (P2) pour alimenter ledit agent réducteur vers ledit moyen d'introduction de l'agent réducteur (17), et (e) un moyen de délivrance (11) pour mettre sous pression ledit agent réducteur et délivrer l'agent réducteur sous pression à travers ledit passage d'agent réducteur (P2) vers ledit moyen d'introduction d'agent réducteur (17), et

ledit dispositif de diagnostic étant **caractérisé en ce qu'**il comprend :

un moyen de détection de l'état d'émission (73, 73', 80) pour détecter l'état réel de ladite émission d'échappement ;
un moyen de détection de pression (71, 71') pour détecter une pression (Pg) dudit agent réducteur sous pression dans ledit passage d'agent réducteur (P2),
un moyen de diagnostic (80) pour diagnostiquer ledit dispositif d'alimentation en agent réducteur, sur la base de ladite pression (Pg) détectée par ledit moyen de détection de pression (71, 71') et dudit état réel de ladite émission d'échappement détectée par ledit moyen de détection d'état d'émission (73, 73') après déclenchement de l'introduction dudit agent réducteur dans ledit système d'échappement par le moyen d'introduction dudit agent réducteur (17), par comparaison avec l'état nominal.

**2.** Dispositif de diagnostic selon la revendication 1, **caractérisé en ce que** ledit moyen de détection d'état démission (71, 71', 80)détecte au moins une parmi : une valeur minimum pour laquelle une concentration en oxygène de ladite émission d'échappement est abaissée comme résultat de l'introduction dudit agent réducteur dans ledit système d'échappement ; un taux de changement de ladite concentration en oxygène pendant l'introduction de l'agent réducteur dans ledit système d'échappement ; une valeur maximum pour laquelle une concentration de composants réducteurs contenus dans ladite émission d'échappement est augmentée comme résultat de l'introduction de l'agent réducteur dans ledit système d'échappement ; et un taux de changement de la concentration desdits composants réducteurs pendant l'introduction de l'agent réducteur dans ledit système d'échappement.

**3.** Dispositif de diagnostic selon la revendication 1 ou 2, **caractérisé en ce que** ledit moyen de diagnostic (80) diagnostique ledit dispositif d'alimentation en agent réducteur (10), sur la base d'une quantité de réduction de la pression de l'agent réducteur dans ledit passage d'agent réducteur (P2) comme résultat de l'introduction de l'agent réducteur par ledit moyen d'introduction de l'agent réducteur (17).

**4.** Dispositif de diagnostic selon la revendication 3,

ledit dispositif d'alimentation en agent réducteur (10) comprenant en outre une soupape de détente (14) ayant un état ouvert pour permettre audit agent réducteur sous pression d'être délivré depuis ledit moyen de délivrance (11) vers ledit moyen d'introduction d'agent réducteur (17), et un état fermé pour empêcher ledit agent réducteur sous pression d'être délivré depuis ledit moyen de délivrance vers ledit moyen d'introduction d'agent réducteur,

ledit moyen de détermination de la quantité délivrée (80) déterminant ladite quantité (Q) d'agent réducteur à introduire dans ledit système d'échappement (40) sur la base de ladite pression (Pg) détectée par ledit moyen de détection de pression (71, 71'), et

ledit dispositif de diagnostic étant **caractérisé en ce que** ledit moyen de diagnostic diagnostique ledit moyen de détection de pression (71, 71') sur la base d'une différence entre la pression de l'agent réducteur sous pression dans ledit passage d'agent réducteur (P2) détecté lorsque l'agent réducteur est introduit par ledit moyen d'introduction de l'agent réducteur (17) pendant que ladite soupape de détente (14) est placée dans ledit état ouvert, et que la pression de l'agent réducteur sous pression dans ledit passage d'agent réducteur (P2) détectée lorsque l'agent réducteur est introduit par ledit moyen d'introduction de l'agent réducteur (17) pendant que ladite soupape de détente (14) est placée dans ledit état fermé, ledit moyen de diagnostic diagnostiquant ledit moyen de détection de pression (71, 71') de telle façon qu'un défaut dudit moyen de détection de pression soit distingué parmi les défauts d'autres composants (11, 16, 17) dudit dispositif d'alimentation en agent réducteur (10).

5. Dispositif de diagnostic selon l'une quelconque des revendications 1 à 3,

ledit moyen de détermination de la quantité alimentée (80) déterminant ladite quantité (Q) d'agent réducteur à introduire dans ledit système d'échappement (40) sur la base de ladite pression (Pg) détectée par ledit moyen de détection de pression (71, 71'), et

ledit dispositif de diagnostic étant **caractérisé en ce que** ledit moyen de diagnostic diagnostique ledit moyen de détection de pression (71, 71') de telle façon qu'un défaut dudit moyen de détection de pression soit distingué parmi les défauts d'autres composants (11, 16, 17) dudit dispositif d'alimentation en agent réducteur (10).

6. Dispositif de diagnostic selon l'une quelconque des revendications 1 à 3, **caractérisé en ce que** ledit moyen de diagnostic diagnostique ledit moyen de commande de la quantité alimentée (16) de telle façon qu'un défaut dudit moyen de commande de la quantité alimentée est distingué parmi les défauts d'autres composants (11, 17, 71, 71') dudit dispositif d'alimentation en agent réducteur (10).

7. Dispositif de diagnostic selon l'une quelconque des revendications 1 à 3, **caractérisé en ce que** ledit moyen de diagnostic diagnostique ledit moyen de délivrance (11) de telle façon qu'un défaut dudit dispositif de délivrance soit distingué parmi les défauts d'autres composants (16, 17, 71, 71') dudit dispositif d'alimentation en agent réducteur (10).

8. Dispositif de diagnostic selon l'une quelconque des revendications 1 à 3, **caractérisé en ce que** ledit moyen de diagnostic diagnostique ledit moyen d'introduction de l'agent réducteur (17) de telle façon qu'un défaut dudit moyen d'introduction de l'agent réducteur soit distingué parmi les défauts d'autres composants (11, 16, 71, 71') dudit dispositif d'alimentation en agent réducteur (10).

9. Dispositif de diagnostic selon la revendication 8, **caractérisé en ce qu'**il comprend en outre un moyen de traitement (80) utilisable lorsque ledit moyen de diagnostic diagnostique que ledit moyen d'introduction de l'agent réducteur (17) est défectueux, ledit moyen de traitement effectuant un traitement (S507, S508d ; S606, S608) pour retirer ledit défaut dudit moyen d'introduction de l'agent réducteur.

10. Dispositif de diagnostic selon la revendication 9, ledit moyen d'introduction de l'agent réducteur comprenant une buse d'introduction de l'agent réducteur (17) pour injecter ledit agent réducteur dans ledit système d'échappement (40), et
Ledit dispositif de diagnostic étant **caractérisé en ce que** ledit moyen de traitement (80) est utilisable, lors de la détermination par ledit moyen de diagnostic (80) que ladite buse d'introduction de l'agent réducteur est bouchée par des corps étrangers, pour retirer lesdits corps étrangers de ladite buse.

11. Dispositif de diagnostic selon la revendication 10, **caractérisé en ce que** ledit moyen de traitement (80) augmente graduellement d'une quantité dudit agent réducteur à introduire à travers ladite buse d'introduction de l'agent réducteur (17), après que ledit moyen de diagnostic ait déterminé que ladite buse est bouchée par des corps étrangers.

12. Procédé de diagnostic d'un dispositif d'alimentation en un agent réducteur (10) utilisable pour introduire un agent réducteur dans un système d'échappement (40) d'un moteur à combustion interne (1, 1'), **caractérisé en ce qu'**il comprend les étapes de :

détection d'un état réel d'émission d'échappement déchargée depuis ledit moteur à combustion interne, après déclenchement de l'introduction dudit agent réducteur dans ledit système d'échappement (40) ; et
diagnostic dudit dispositif d'alimentation en agent réducteur sur la base d'une quantité de réduction de la pression dudit agent réducteur dans un passage d'agent réducteur (P2) fourni pour alimenter en agent réducteur et de l'état de la pression réelle détectée de ladite émission d'échappement comparée à un état nominal lorsque ledit dispositif d'alimentation en agent réducteur est normal.

**13.** Procédé selon la revendication 12, **caractérisé en ce que** ladite étape de détection dudit état réel de ladite émission d'échappement comprend la détection d'au moins une parmi : une valeur minimum pour laquelle une concentration en oxygène de ladite émission d'échappement est abaissée comme résultat de l'introduction dudit agent réducteur dans ledit système d'échappement ; un taux de changement de ladite concentration en oxygène pendant l'introduction de l'agent réducteur dans ledit système d'échappement ; une valeur maximum pour laquelle une concentration de composants réducteurs contenus dans ladite émission d'échappement est augmentée comme résultat de l'introduction de l'agent réducteur dans ledit système d'échappement ; et un taux de changement de la concentration desdits composants réducteurs pendant l'introduction de l'agent réducteur dans ledit système d'échappement.

**14.** Procédé selon la revendication 12, **caractérisé en ce que** ladite étape de diagnostic dudit dispositif d'alimentation en agent réducteur (10) comprend la détection d'un défaut **en ce que** la buse d'introduction d'un agent réducteur (17) fournie pour introduire l'agent réducteur dans ledit système d'échappement (40) est bouchée par des corps étrangers, ledit procédé comprenant en outre une étape d'augmentation graduelle d'une quantité dudit agent réducteur à introduire à travers la buse d'introduction dudit agent réducteur (17), après que l'on ait diagnostiqué que ladite buse est bouchée avec des corps étrangers, de façon à ce que l'on retire les corps étrangers de ladite buse.

FIG. 1

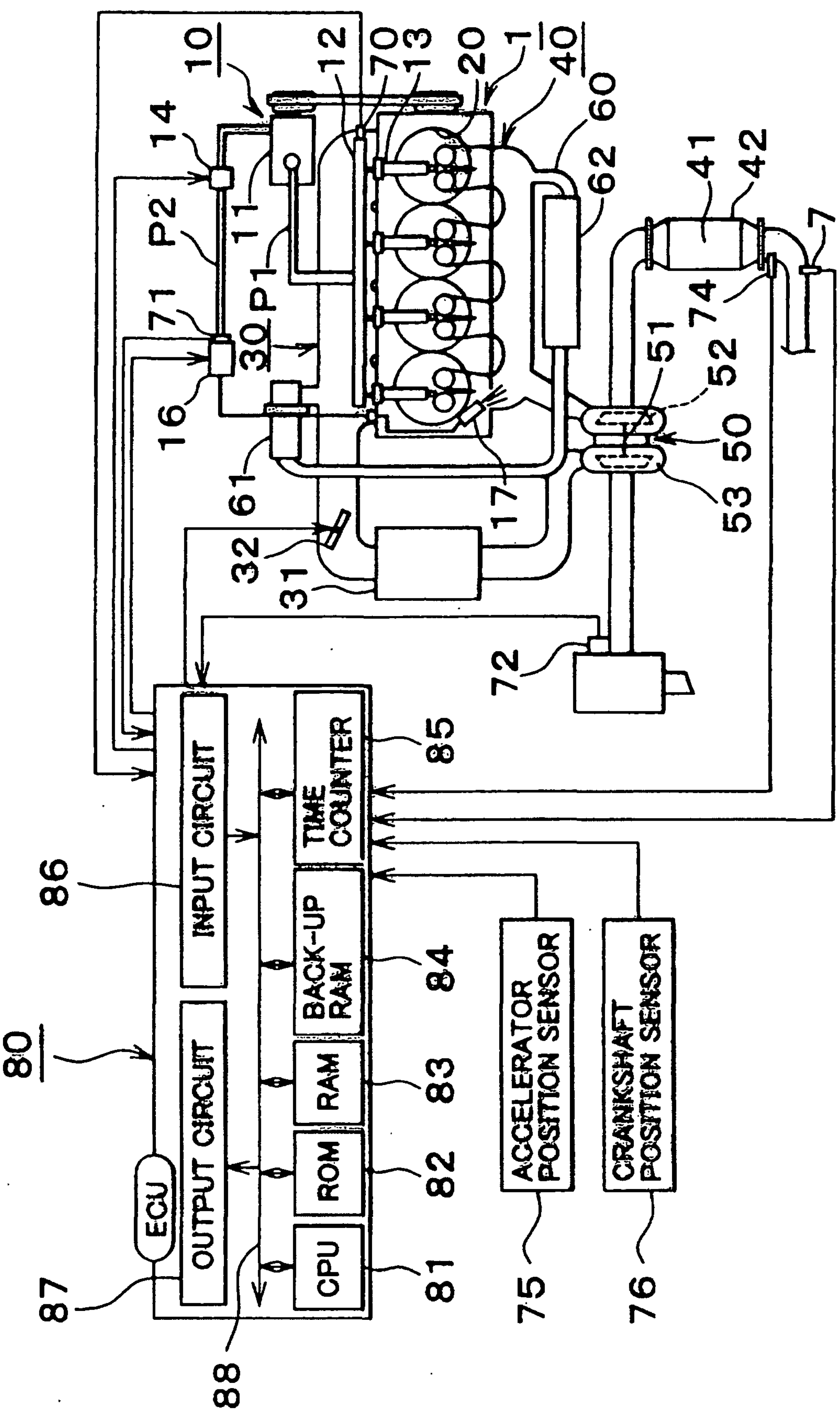
10
12
70
13
20
1
40
14
60
62
11
P2
41
42
P1
7
71
30
74
51
52
16
50
61
17
53
32
31
72
86
85
INPUT CIRCUIT
TIME COUNTER
80
BACK-UP RAM
84
RAM
83
OUTPUT CIRCUIT
ROM
82
ECU
CPU
81
87
88
ACCELERATOR POSITION SENSOR
75
CRANKSHAFT POSITION SENSOR
76

FIG. 2

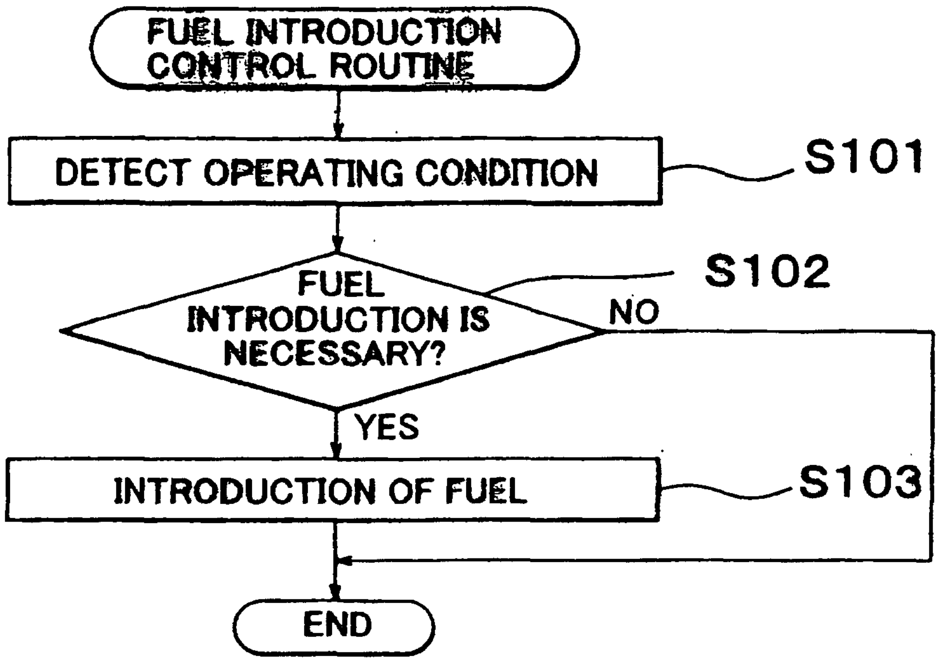
FUEL INTRODUCTION CONTROL ROUTINE
DETECT OPERATING CONDITION
S101
FUEL INTRODUCTION IS NECESSARY?
S102
NO
YES
INTRODUCTION OF FUEL
S103
END

FIG. 3a

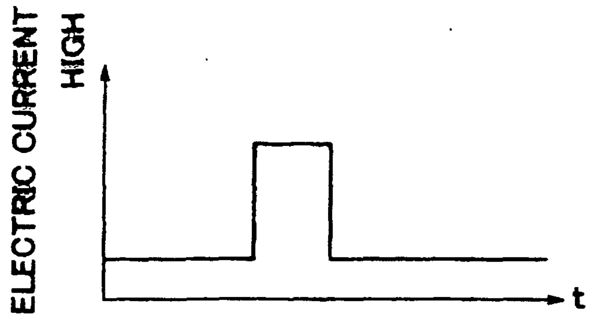


FIG. 3b

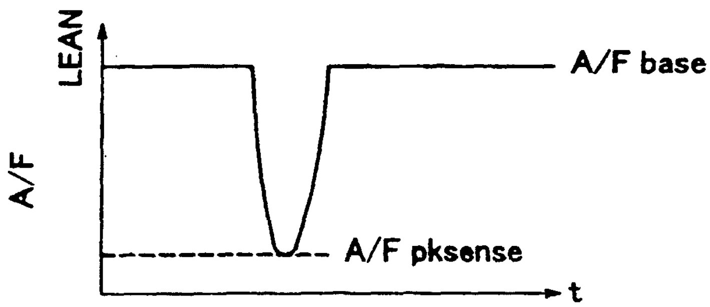


FIG. 3c

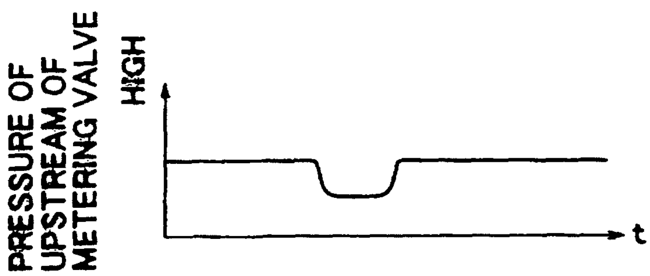


FIG. 3d

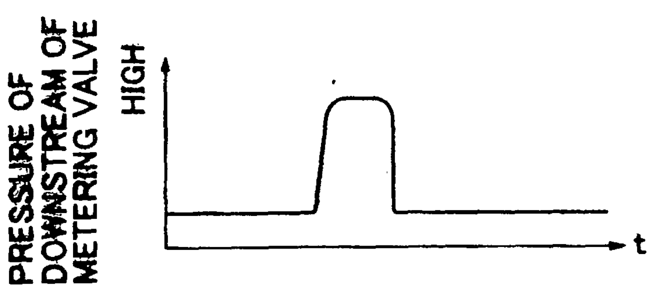

FIG. 4

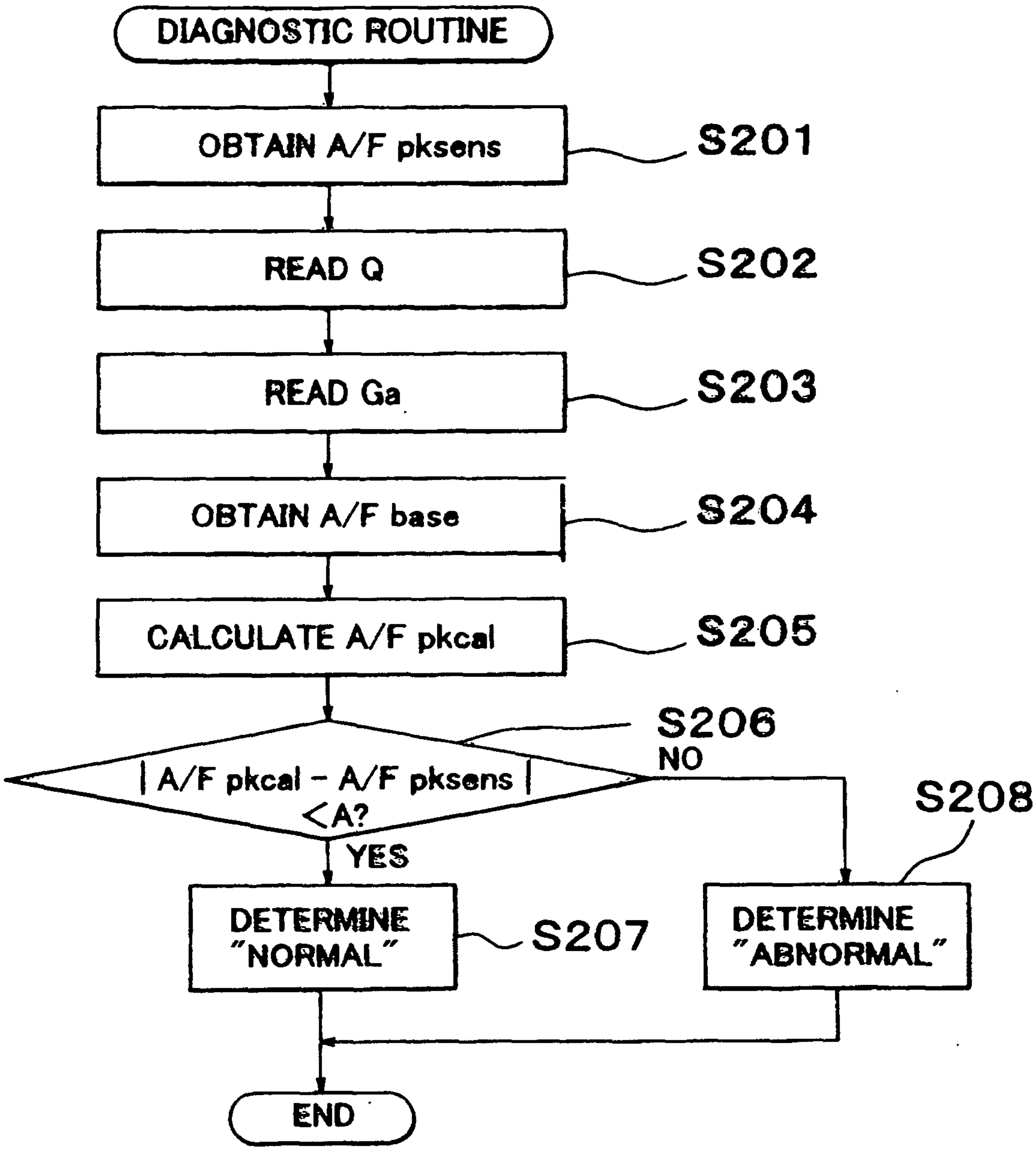
DIAGNOSTIC ROUTINE
OBTAIN A/F pksens
S201
READ Q
S202
READ Ga
S203
OBTAIN A/F base
S204
CALCULATE A/F pkcal
S205
S206
\| A/F pkcal − A/F pksens \|
<A?
NO
YES
DETERMINE "NORMAL"
S207
DETERMINE "ABNORMAL"
S208
END

FIG. 5

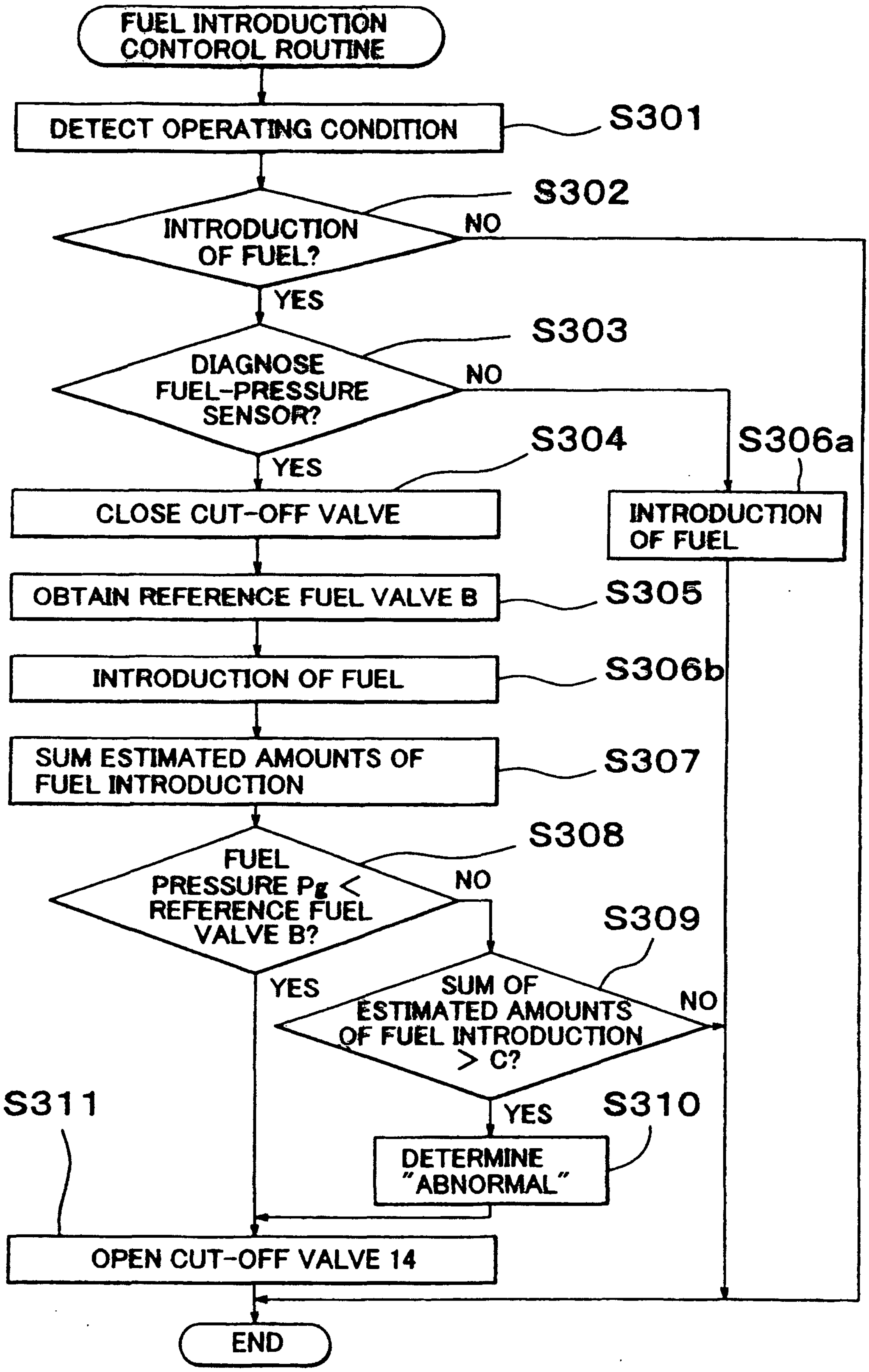
FUEL INTRODUCTION CONTOROL ROUTINE
DETECT OPERATING CONDITION
S301
INTRODUCTION OF FUEL?
S302
NO
YES
DIAGNOSE FUEL-PRESSURE SENSOR?
S303
NO
YES
S304
S306a
CLOSE CUT-OFF VALVE
INTRODUCTION OF FUEL
OBTAIN REFERENCE FUEL VALVE B
S305
INTRODUCTION OF FUEL
S306b
SUM ESTIMATED AMOUNTS OF FUEL INTRODUCTION
S307
FUEL PRESSURE Pg < REFERENCE FUEL VALVE B?
S308
NO
S309
YES
SUM OF ESTIMATED AMOUNTS OF FUEL INTRODUCTION > C?
NO
YES
S310
S311
DETERMINE "ABNORMAL"
OPEN CUT-OFF VALVE 14
END

FIG. 6

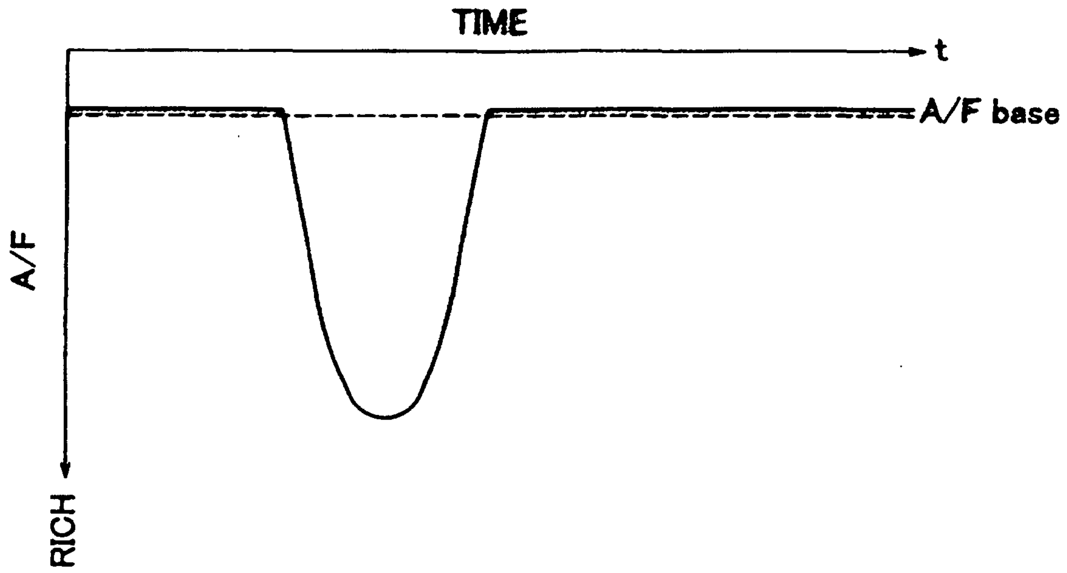


FIG. 7

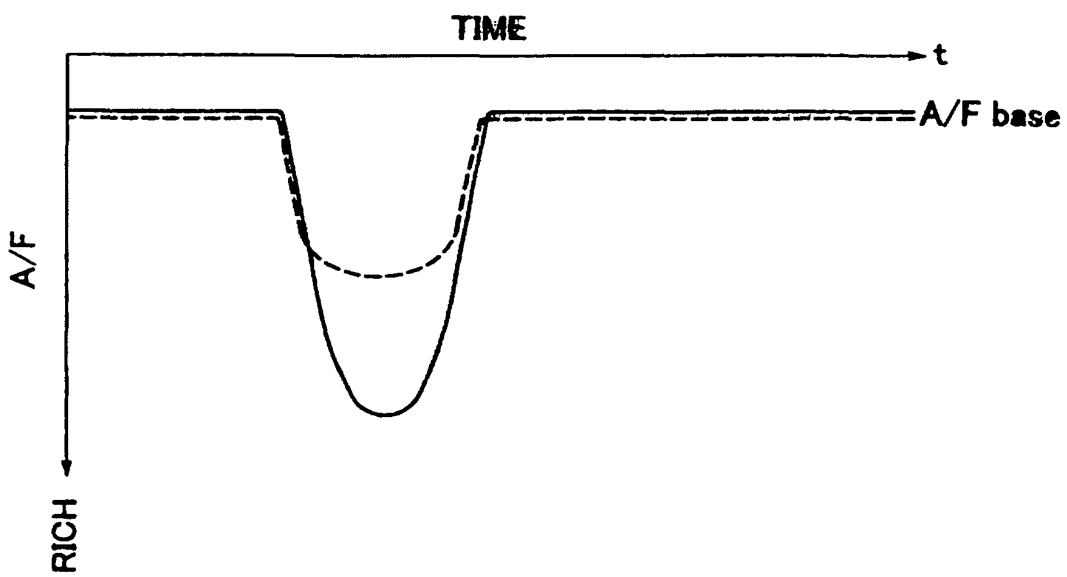

FIG. 8

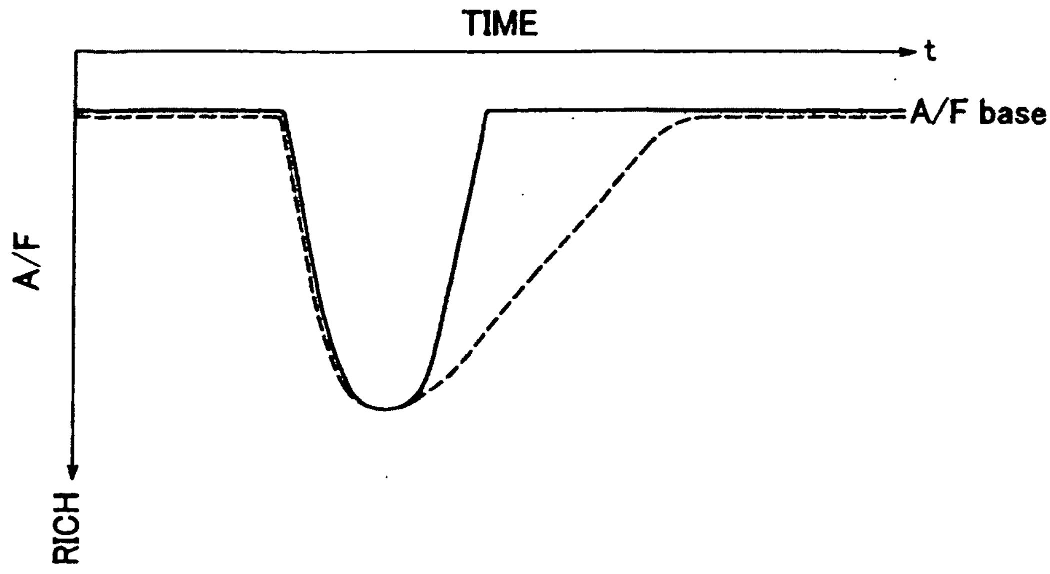


FIG. 9

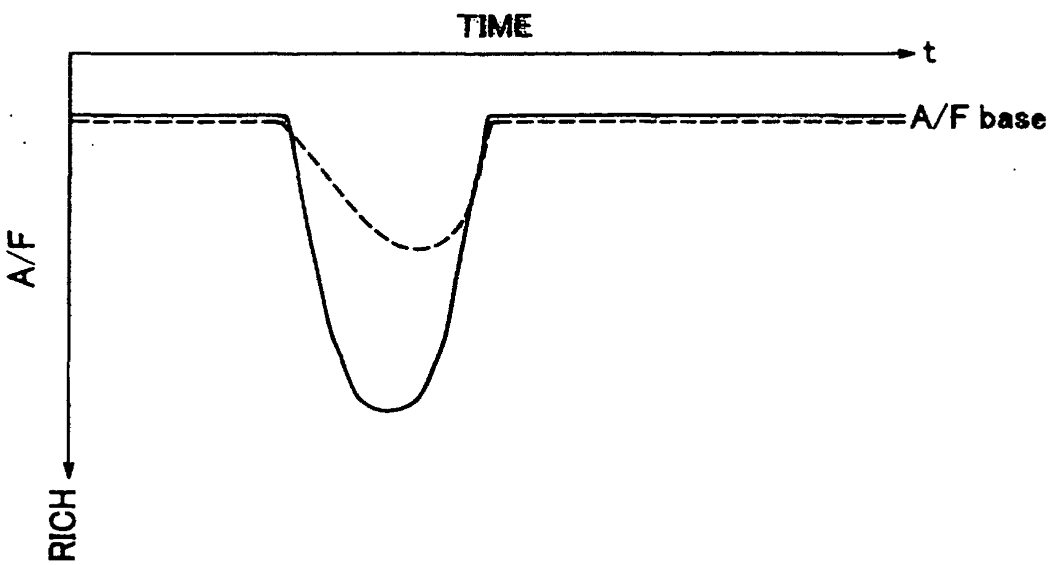

FIG. 10

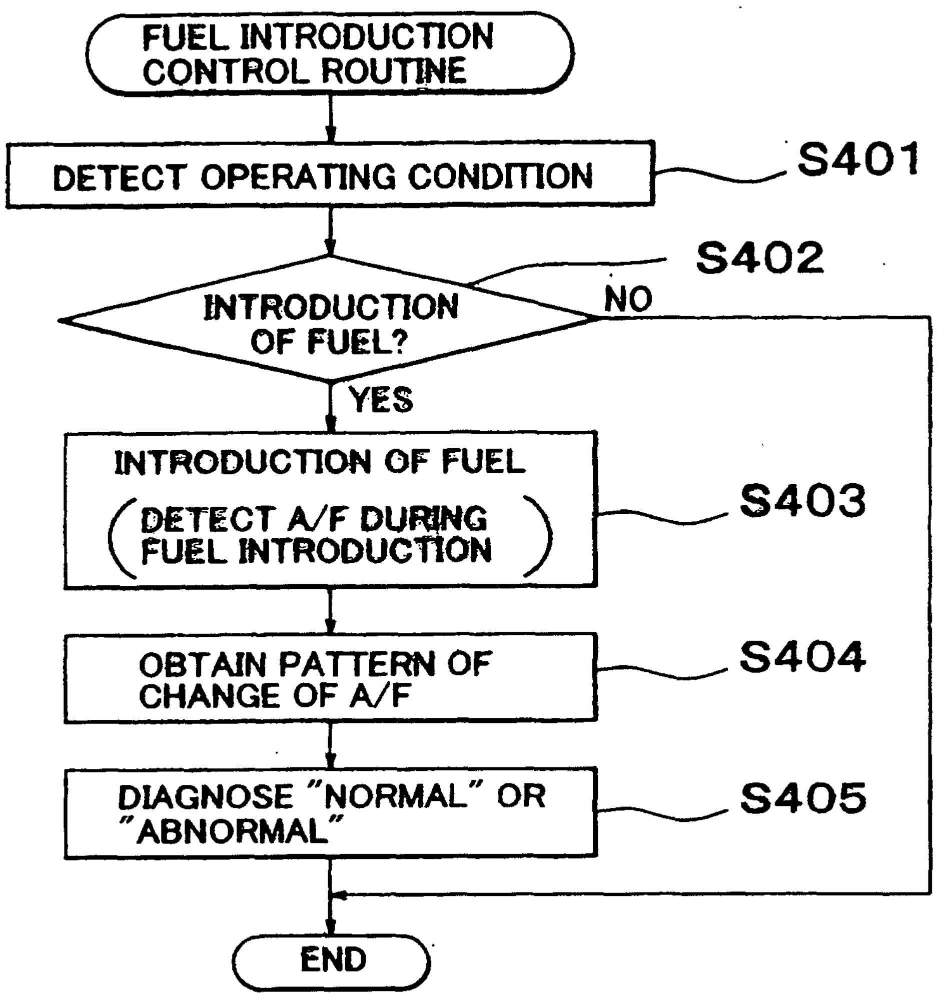
FUEL INTRODUCTION CONTROL ROUTINE
DETECT OPERATING CONDITION
S401
S402
INTRODUCTION OF FUEL?
NO
YES
INTRODUCTION OF FUEL
(DETECT A/F DURING FUEL INTRODUCTION)
S403
OBTAIN PATTERN OF CHANGE OF A/F
S404
DIAGNOSE "NORMAL" OR "ABNORMAL"
S405
END

FIG. 11

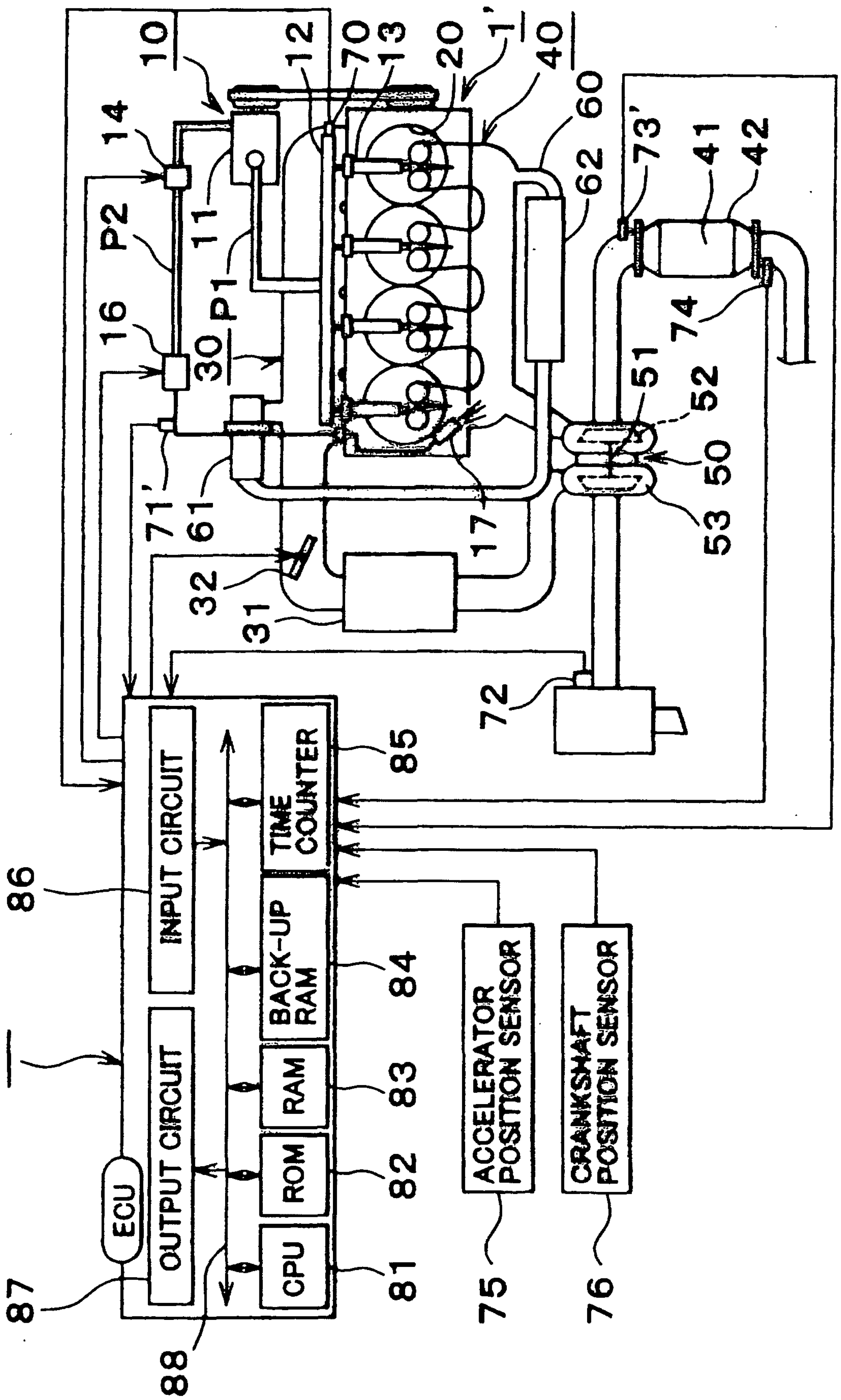
10
14
P2
16
71'
61
30
P1
11
12
70
13
20
1'
40
60
62
17
32
31
72
51
52
50
53
73'
41
42
74
80
INPUT CIRCUIT
86
OUTPUT CIRCUIT
ECU
87
88
CPU
81
ROM
82
RAM
83
BACK-UP RAM
84
TIME COUNTER
85
ACCELERATOR POSITION SENSOR
75
CRANKSHAFT POSITION SENSOR
76

FIG. 12

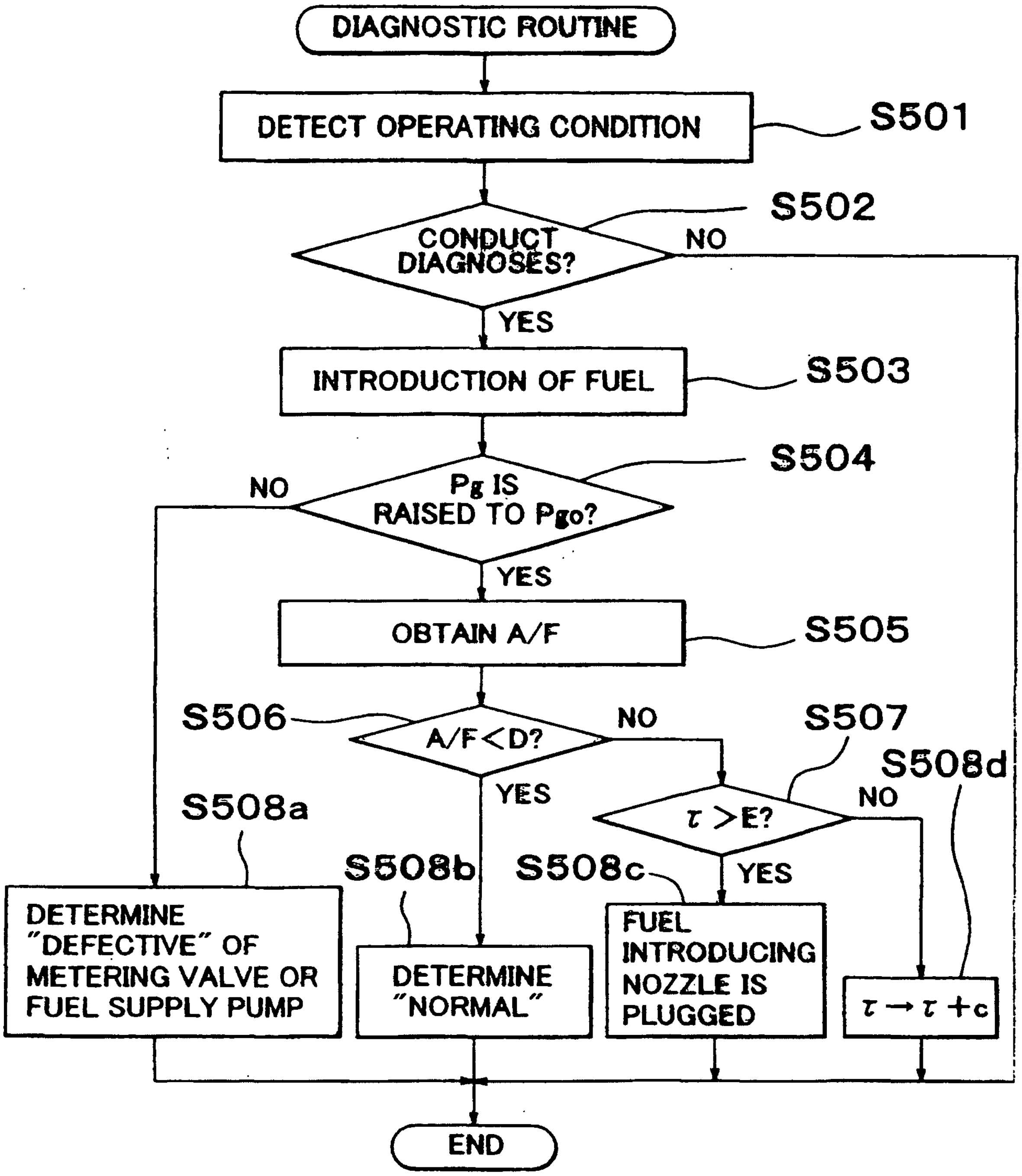
DIAGNOSTIC ROUTINE
DETECT OPERATING CONDITION
S501
CONDUCT DIAGNOSES?
S502
NO
YES
INTRODUCTION OF FUEL
S503
Pg IS RAISED TO Pgo?
S504
NO
YES
OBTAIN A/F
S505
S506
A/F<D?
NO
S507
S508d
YES
τ>E?
NO
S508a
S508b
S508c
YES
DETERMINE "DEFECTIVE" OF METERING VALVE OR FUEL SUPPLY PUMP
DETERMINE "NORMAL"
FUEL INTRODUCING NOZZLE IS PLUGGED
τ→τ+c
END

FIG. 13

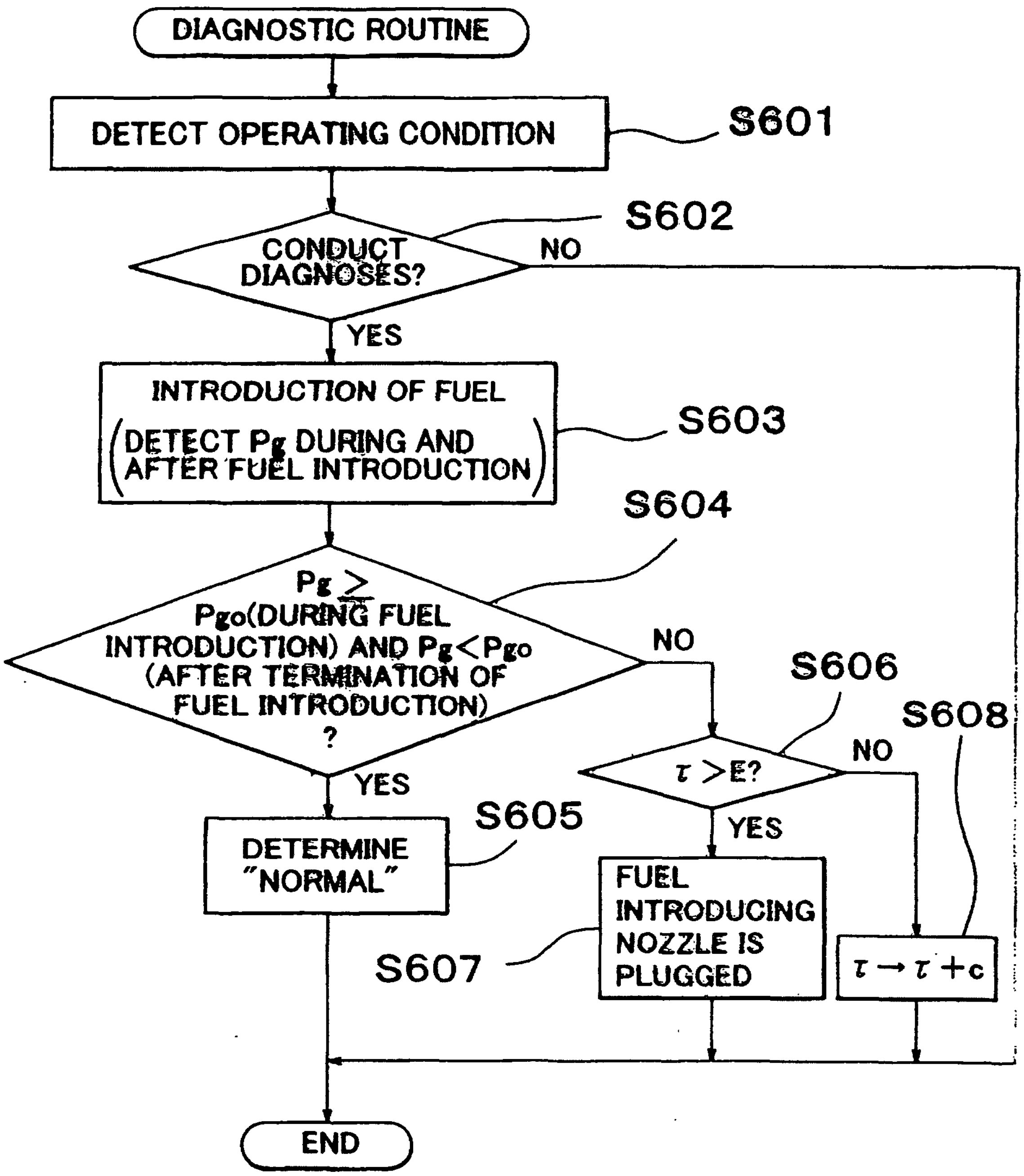
DIAGNOSTIC ROUTINE
DETECT OPERATING CONDITION
S601
S602
CONDUCT DIAGNOSES?
NO
YES
INTRODUCTION OF FUEL
(DETECT Pg DURING AND AFTER FUEL INTRODUCTION)
S603
S604
Pg ≥ Pgo(DURING FUEL INTRODUCTION) AND Pg<Pgo (AFTER TERMINATION OF FUEL INTRODUCTION) ?
NO
S606
S608
NO
τ >E?
YES
S605
YES
DETERMINE "NORMAL"
FUEL INTRODUCING NOZZLE IS PLUGGED
S607
τ → τ +c
END